# EUROPÄISCHE PATENTSCHRIFT

(11) **EP 4 710 770 B1**
(45) Veröffentlichungstag und Bekanntmachung des Hinweises auf die Patenterteilung: **04.11.2026**
(21) Anmeldenummer: 24200345.7
(22) Anmeldetag: 13.09.2024
(51) Int. Cl.: A21C 3/06

(54) **VORRICHTUNG ZUM AUFWICKELN VON TEIGSTÜCKEN ZU GEWICKELTEN TEIGPRODUKTEN**
DEVICE FOR WINDING DOUGH PIECES INTO WOUND DOUGH PRODUCTS
DISPOSITIF POUR ENROULER DES MORCEAUX DE PÂTE À ENROULER DES PRODUITS À BASE DE PÂTE

(43) Veröffentlichungstag der Anmeldung: 18.03.2026
(73) Patentinhaber: Rondo Burgdorf AG, 3400 Burgdorf (CH)
(72) Erfinder: BARGEN, Andreas, 3418 Rüegsbach (CH); SCHÜPBACH, Luca, 3550 Langnau (CH)
(74) Vertreter: Keller Schneider Patent- und Markenanwälte AG

(56) Entgegenhaltungen:
- EP-A1- 0 204 490
- EP-B1- 0 986 306
- CH-A- 316 391
- FR-A- 600 363
- FR-A- 768 213

## Beschreibung

### Technisches Gebiet

Die Erfindung betrifft eine Vorrichtung zum Aufwickeln von Teigstücken zu gewickelten Teigprodukten, insbesondere zur Herstellung von Croissants aus Teigstücken.

### Stand der Technik

Aus dem Stand der Technik sind unterschiedliche Vorrichtungen und Verfahren zum Aufwickeln von Teigstücken bekannt. Insbesondere können gewickelte Teigprodukte, wie beispielsweise Croissants, durch Aufrollen eines flachen Teigstückes zwischen zwei gegenläufigen Bändern hergestellt werden.

Beispielsweise offenbart die EP 0 204 490 A1 (Rheon Machinery Co. Ltd.) eine Vorrichtung mit einem Wickelmechanismus, der über zwei übereinander angeordneten Förderbänder verfügt und die eine gegenläufige Bandlaufrichtung aufweisen. Das untere Band hat eine höhere Geschwindigkeit als das obere Band. Zunächst wird ein Teigstück durch einen Walzenspalt zu einem ersten Ende des unteren Förderbandes geführt, wo die Vorderkante des Teigstücks nach oben und dort durch Kontakt mit dem oberen Förderband weiter nach hinten umgeschlagen wird. Durch eine Bewegung des vorderen Endes nach unten und damit mit einer Vergrösserung des Abstandes zwischen den beiden Förderbändern im Bereich des ersten Endes wird das teilgewickelte Teigstück zwischen beide Förderbänder gezogen, wobei das Teigstück zwischen den Förderbändern gleichzeitig gefördert und fertiggewickelt wird. Die Vorrichtung kann eine Kontrolleinheit aufweisen, welche die Bewegung des ersten Endes nach einer vorbestimmten Zeit, nachdem ein Teigstück mit diesem in Kontakt kommt, auslöst. Die Geschwindigkeit der Förderbänder kann frei eingestellt werden.

Die EP 2 762 005 A1 (Rondo Schio S.r.l) beschreibt eine Fertigungsstrasse für gerollte Teigprodukte, insbesondere für Croissants. Die Fertigungsstrasse umfasst ein Fördermittel für ein Teigprodukt sowie eine Wickelvorrichtung mit einem Umlenkelement, welches von einer Eingriffsposition, in welcher das Umlenkelement über dem Fördermittel hervorsteht, in eine Loslöseposition bewegbar ist. Über dem Umlenkelement ist ein Wickelelement angeordnet, welches mit dem Umlenkelement zusammenwirkt, um das Teigprodukt zu wickeln. Das Umlenkelement wird über eine Antriebsvorrichtung periodisch von der Eingriffsposition in die Loslöseposition bewegt. Sowohl der Oszillationswinkel als auch die Position des Wickelelements lassen sich über entsprechende Einstellmittel verändern.

Die EP 0 327 856 A1 (C.I.M. S.r.l) bezieht sich auf eine Wickelvorrichtung zum Aufwickeln von Croissants. Die Wickelvorrichtung verfügt über zwei übereinander angeordnete Förderbänder, wobei bei einem unteren Förderband die vordere Kante in einer oszillierenden Bewegung auf- und ab bewegt wird. Die Oszillationsbewegungen werden mit den restlichen Bewegungen der Vorrichtung koordiniert. Zwischen einer Walze, des oberen Förderbandes sowie der Vorderkante des unteren Förderbandes bildet sich ein Sitz, in welchem ein Teigstück gerollt werden kann. Ein Teigdreieck wird an der Vorderkante des unteren Förderbandes aufgerollt, wobei durch die nach unten gerichtete Oszillationsbewegung der vorderen Kante das fertig gerollte Teigstück zur Förderung über das untere Transportband freigegeben wird.

### Darstellung der Erfindung

Aufgabe der Erfindung ist es, eine dem eingangs genannten technischen Gebiet zugehörende Vorrichtung zum Aufwickeln von Teigstücken zu gewickelten Teigprodukten zu schaffen, mit welcher Teigstücke möglichst schonend, effizient und zuverlässig aufgewickelt werden können.

Die Lösung der Aufgabe ist durch die Merkmale des Anspruchs 1 definiert. Gemäss der Erfindung umfasst die Vorrichtung eine untere Wickeleinheit mit mindestens einem ersten Wickelband. Das mindestens eine erste Wickelband ist um eine erste Welle und um eine zweite Welle gespannt, wobei die erste Welle und/oder die zweite Welle mittels eines ersten Antriebes der Vorrichtung derart angetrieben wird, dass eine obere Bandstrecke des mindestens einen ersten Wickelbandes von der ersten Welle zur zweiten Welle hin in einer Förderrichtung bewegt wird. Die Vorrichtung umfasst weiter eine obere Wickeleinheit mit mindestens einem zweiten Wickelband. Das mindestens eine zweite Wickelband ist um eine dritte Welle und um eine vierte Welle gespannt, wobei die dritte Welle und/oder die vierte Welle mittels eines zweiten Antriebes der Vorrichtung derart angetrieben wird, dass eine untere Bandstrecke des mindestens einen zweiten Wickelbandes von der vierten Welle zur dritten Welle hin entgegen der Förderrichtung bewegt wird. Die obere Wickeleinheit ist in vertikaler Richtung oberhalb der unteren Wickeleinheit derart angeordnet, dass zwischen der oberen Bandstrecke des mindestens einen ersten Wickelbandes und der unteren Bandstrecke des mindestens einen zweiten Wickelbandes ein Wickelraum gebildet wird, dessen Ausdehnung in vertikaler Richtung entlang der Förderrichtung vorzugsweise grösser wird. Die Vorrichtung weist zudem mindestens eine erste Zuführwalze auf, welche in Förderrichtung horizontal vor der ersten Welle derart angeordnet ist, dass ein oberer Scheitelpunkt einer Mantelfläche der ersten Zuführwalze vertikal oberhalb der oberen Bandstrecke des mindestens einen ersten Wickelbandes liegt und die erste Welle in Förderrichtung horizontal in einem ersten Abstand von weniger als 5mm zur Mantelfläche der ersten Zuführwalze und vertikal unterhalb des oberen Scheitelpunktes angeordnet ist. Hierbei ist eine Längsachse der ersten Welle parallel zu einer Längsachse der ersten Zuführwalze ausgerichtet. Die erste Welle weist einen Durchmesser von maximal 15mm, vorzugsweise von maximal 10mm auf, wobei eine Mantelfläche der ersten Welle über mindestens ein Wälzlager auf ein in der Förderrichtung hinter der ersten Welle angeordnetes Stützelement abgestützt wird.

Dadurch, dass die erste Welle einen relativ kleinen Durchmesser von weniger als 15mm aufweist, wird die Lücke, die zwischen der Mantelfläche der ersten Zuführwalze und der Mantelfläche der ersten Welle entsteht, gegenüber den im Stand der Technik bekannten Wickelvorrichtungen erheblich verringert. Dadurch kann die Zuverlässigkeit der Vorrichtung sowie die Qualität der gewickelten Teigprodukte verbessert werden. Durch die Abstützung der ersten Welle auf das Stützelement mittels des mindestens einen Wälzlagers kann ein Verbiegen der ersten Welle aufgrund der Zugkräfte, die durch das mindestens eine erste Wickelband auf die erste Welle ausgeübt werden, verhindert werden.

In der vorliegenden Anmeldung wird unter "Teigstück" ein in eine bestimmte Form zugeschnittenes und kalibriertes, d.h. auf eine bestimmte Dicke gewalztes Stück eines rohen Teigs verstanden. Das Stück Teig kann dabei insbesondere in der Form eines Quadrats, Rechtecks, Dreiecks, Kreises, Ellipse, Polygons oder sonst einer geeigneten Form vorliegen. Sofern mit der erfindungsgemässen Vorrichtung Croissants hergestellt werden, so liegen die Teigstücke in der Form von Dreiecken vor. Die Teigstücke können zur Herstellung von gefüllten Teigprodukten, insbesondere von gefüllten Croissants, auf einer oben liegenden Seite mit einer Füllmasse versehen sein, beispielsweise mit Käse, Schinken oder eine Mischung davon, Nussmasse, Mandelmasse, Fruchtpüree, Marmelade oder ähnlich.

Als "Teigprodukt" wird in der vorliegenden Anmeldung ein zu einer dreidimensionalen Form verarbeitetes Teigstück verstanden, insbesondere ein Teigling. Mit der vorliegenden Vorrichtung lassen sich Teigstücke zu gewickelten Teigprodukten wickeln, insbesondere Croissants, gefüllte Croissants sowie Stangenbrötchen.

Als "Teig" wird in der vorliegenden Anmeldung eine Mischung aus wenigstens einem Mehl mit mindestens einer Flüssigkeit verstanden, z.B. ein Hefeteig. Zur Herstellung von Croissants mit der erfindungsgemässen Vorrichtung wird insbesondere ein laminierter Teig verwendet.

In der vorliegenden Anmeldung wird unter unten und oben bzw. untere und obere eine Richtungsangabe bzw. Position in Wirkrichtung der Schwerkraft, also gemeinhin in vertikaler Richtung beim bestimmungsgemässen Gebrauch der Vorrichtung verstanden. Demgemäss befindet sich die untere Wickeleinheit in Richtung vertikal unterhalb der oberen Wickeleinheit.

Die Vorrichtung verfügt vorzugsweise über ein Gehäuse, welche alle Komponenten der Vorrichtung umschliesst. Das Gehäuse ist vorzugsweise vollständig geschlossen, um eine Verschmutzung der Komponenten zu verhindern und um die Verletzungsgefahr eines Operateurs durch die bewegten Komponenten zu minimieren. Das Gehäuse verfügt vorzugsweise lediglich über zwei Öffnungen, eine Eintrittsöffnung im Bereich der Zuführwalze sowie eine Ausgabeöffnung in Förderrichtung hinter der zweiten Welle. Das Gehäuse weist vorzugsweise Klappen oder öffenbare Seitenflächen auf, um die Reinigung, Wartung und den Austausch einzelner Komponenten zu ermögliche. Vorzugsweise verfügt das Gehäuse über Rollen, so dass die Vorrichtung einfach verschoben werden kann.

Die Vorrichtung wird vorzugsweise als Bestandteil einer Verarbeitungsanlage für Teig eingesetzt. Eine derartige Verarbeitungsanlage verfügt vorzugsweise über Fördermittel, mit denen ein Teig, Teigband und/oder Teigstücke entlang einer Förderrichtung gefördert werden können sowie über eine oder mehrere Teigbearbeitungsvorrichtungen, mit denen ein Teig zu Teigstücken verarbeitet werden kann, wie beispielsweise eine Ausrollmaschine, eine Schneidmaschine, einen Separierer oder ähnlich. Mittels der Fördermittel können die Teigstücke der ersten Zuführwalze zugeführt werden, welche in der Folge die Teigstücke in den Wickelraum überführt.

Die Teigstücke gelangen vorzugsweise über die Eintrittsöffnung auf die Zuführwalze, werden im Wickelraum zu gewickelten Teigprodukten aufgewickelt und anschliessend über die Ausgabeöffnung ausgegeben, z.B. auf ein Förderband.

Das mindestens eine erste Wickelband ist als Endlosband ausgestaltet, welches durch die erste und die zweite Welle umgelenkt wird. Dadurch spannt sich das mindestens eine erste Wickelband um die erste und zweite Welle und erstreckt sich zwischen diesen, wobei hierdurch das mindestens eine erste Wickelband in eine obere Bandstrecke sowie eine untere Bandstrecke unterteilt wird. Mittels des ersten Antriebes kann die erste und/oder die zweite Welle in eine Drehbewegung versetzt werden. Diese Drehbewegung überträgt sich in Folge der Haftreibung oder entsprechender Übertragungsmittel, wie z.B. des Eingreifens eines Zahnkranzes der ersten und/oder zweiten Welle in eine entsprechende Verzahnung des mindestens einen ersten Wickelbandes, so dass das mindestens eine erste Wickelband bewegt wird. Der erste Antrieb ist derart ausgestaltet, dass die obere Bandstrecke des mindestens einen ersten Wickelbandes von der ersten Welle zur zweiten Welle hin in die Förderrichtung bewegt wird. Dementsprechend bewegt sich die untere Bandstrecke des mindestens einen ersten Wickelbandes von der zweiten Welle zur ersten Welle hin entgegen der Förderrichtung.

Das mindestens eine zweite Wickelband ist als Endlosband ausgestaltet, welches durch die dritte und die vierte Welle umgelenkt wird. Dadurch spannt sich das mindestens eine zweite Wickelband um die dritte und vierte Welle und erstreckt sich zwischen diesen, wobei hierdurch das mindestens eine zweite Wickelband in eine obere Bandstrecke sowie eine untere Bandstrecke unterteilt wird. Mittels des zweiten Antriebes kann die dritte und/oder die vierte Welle in eine Drehbewegung versetzt werden. Diese Drehbewegung überträgt sich in Folge der Haftreibung oder entsprechender Übertragungsmittel, wie z.B. des Eingreifens eines Zahnkranzes der dritten und/oder vierten Welle in eine entsprechende Verzahnung des mindestens einen zweiten Wickelbandes, so dass das mindestens eine zweite Wickelband bewegt wird. Der zweite Antrieb ist derart ausgestaltet, dass die untere Bandstrecke des mindestens einen zweiten Wickelbandes von der vierten Welle zur dritten Welle hin in entgegen der Förderrichtung bewegt wird. Dementsprechend bewegt sich die obere Bandstrecke des mindestens einen zweiten Wickelbandes von der dritten Welle zur vierten Welle hin in der Förderrichtung.

Das mindestens eine erste Wickelband und/oder das mindestens eine zweite Wickelband können hierbei als Förderbänder ausgestaltet sein und bestehen vorzugsweise aus einem Textilmaterial oder einem Polymermaterial, welches lebensmittelverträglich ist. Vorzugsweise weisen das mindestens eine erste Wickelband und/oder das mindestens eine zweite Wickelband elastische Eigenschaften auf. Dadurch, dass die Wickelbänder elastisch sind, kann eine schonendere Bearbeitung der Teigstücke bzw. Teigprodukte beim Aufwickeln erzielt werden.

Der erste Antrieb und/oder der zweite Antrieb umfassen vorzugsweise einen Elektromotor, wie z.B. einen Schrittmotor, Servomotor, Wechselstrommotor, Gleichstrommotor oder Drehstrommotor. Alternativ kann der erste Antrieb und/oder der zweite Antrieb auch als Hydraulik- oder Pneumatikantrieb ausgestaltet sein. Der erste und/oder der zweite Antrieb können direkt mit einer der Wellen verbunden sein, vorzugsweise jedoch über ein Getriebe, welches als Untersetzungs- oder Übersetzungsgetriebe ausgestaltet sein kann.

In einer bevorzugten Ausführungsform können der erste und der zweite Antrieb jedoch auch als Getriebe ausgestaltet sein, welche von einem gemeinsamen Motor angetrieben werden. Insbesondere können der erste und der zweite Antrieb als Zahnriemenrad oder -scheibe ausgestaltet sein.

Das mindestens eine erste Wickelband sowie das mindestens eine zweite Wickelband werden vorzugsweise mit unterschiedlichen Geschwindigkeiten bewegt bzw. angetrieben, wobei vorzugsweise das mindestens eine erste Wickelband mit einer höheren Geschwindigkeit angetrieben bzw. bewegt wird, wie das mindestens eine zweite Wickelband.

Die Längsachsen der ersten, zweiten, dritten und vierten Welle sind parallel zueinander ausgerichtet und vorzugsweise im Wesentlichen in einer horizontalen Raumrichtung angeordnet. Die Wellen werden hierbei vorzugsweise an ihren Enden mittels eines Drehlagers an einem Gehäuse der Vorrichtung abgestützt. Als Drehlager werden vorzugsweise Wälzlager eingesetzt.

Die Wellen sind vorzugsweise alle gleich lang. Der Durchmesser der zweiten, dritten und vierten Welle ist vorzugsweise grösser als der Durchmesser der ersten Welle. Dieser Durchmesser beträgt vorzugsweise von 25mm bis 40mm. Hierbei können die zweite, dritte und vierte Welle über denselben Durchmesser verfügen, oder auch über unterschiedliche Durchmesser.

Die Wellen sind vorzugsweise aus Stahl, insbesondere rostfreiem Stahl, einem Polymermaterial, Aluminium oder einer geeigneten Legierung gefertigt.

Die obere Wickeleinheit ist oberhalb der unteren Wickeleinheit angeordnet, so dass die obere Bandstrecke des mindestens einen ersten Wickelbandes von der unteren Bandstrecke des mindestens einen zweiten Wickelbandes in vertikaler Richtung relativ zueinander beabstandet ist. Der so gebildete Zwischenraum stellt den Wickelraum dar, in welchem die Teigstücke zu gewickelten Teigprodukten aufgewickelt werden.

Vorzugsweise nimmt die Ausdehnung des Wickelraumes in vertikaler Richtung entlang der Förderrichtung zu. Das heisst, dass der vertikale Abstand zwischen der oberen Bandstrecke des mindestens einen ersten Wickelbandes zur unteren Bandstrecke des mindestens einen zweiten Wickelbandes in Förderrichtung zunimmt. Dadurch wird eine Komprimierung der Teigstücke beim Aufwickelprozess verhindert, da deren Durchmesser mit zunehmender Wicklung zunimmt.

Mittels der ersten Zuführwalze werden die Teigstücke auf die obere Bandstrecke des mindestens einen ersten Wickelbandes überführt. Die erste Zuführwalze ist zylindrisch geformt und wird mittels eines dritten Antriebes drehend angetrieben. Der dritte Antrieb ist hierbei derart ausgestaltet, dass die vertikal obere Hälfte der Mantelfläche der ersten Zuführwalze sich in die Förderrichtung dreht.

Als oberer Scheitelpunkt der ersten Zuführwalze wird derjenige Punkt im Querschnitt der ersten Zuführwalze verstanden, der den in vertikaler Richtung höchsten Punkt entlang des Umfangs darstellt.

Dadurch dass der obere Scheitelpunkt der ersten Zuführwalze vertikal oberhalb der oberen Bandstrecke des mindestens einen ersten Wickelbandes angeordnet ist, wird eine in Förderrichtung vorne liegende Kante der Teigstücke in einem Winkel auf die obere Bandstrecke des mindestens einen ersten Wickelbandes auftreffen, wodurch sich im Bereich dieser vorderen Kante eine Einschlagskrümmung ergibt. Bei der weiteren Bewegung der Teigstücke in Förderrichtung hebt sich die vordere Kante von der oberen Bandstrecke des mindestens einen ersten Wickelbandes ab und wird durch die untere Bandstrecke des mindestens einen zweiten Wickelbandes erfasst. In der Folge wird durch die entgegengesetzte Bewegungsrichtung der oberen Bandstrecke des mindestens einen ersten Wickelbandes und der unteren Bandstrecke des mindestens einen zweiten Wickelbandes die Teigstücke aufgewickelt.

Die erste Zuführwalze weist vorzugsweise eine Mantelfläche aus Stahl, insbesondere rostfreiem Stahl auf. Die erste Zuführwalze ist vorzugsweise als Hohlzylinder ausgestaltet und ist insbesondere auf einer Achse, z.B. aus Stahl, aufgezogen.

Da der Durchmesser der ersten Welle klein ist und diese zudem sehr nahe an der ersten Zuführwalze angeordnet ist, wird der im Wesentlichen V-förmige Zwischenraum zwischen der ersten Welle und der ersten Zuführwalze möglichst klein gehalten. Dies reduziert die Entstehung von unschönen Verformungen, Quetschungen oder Dehnungen an den Teigstücken und verhindert auch zuverlässig, dass Teigstücke in diesen Zwischenraum gelangen und zwischen der ersten Zuführwalze und der ersten Welle gequetscht werden.

Durch den relativ kleinen Durchmesser der ersten Welle ist diese biegsamer als Wellen mit grösseren Durchmessern. Da das mindestens eine erste Wickelband unter Spannung steht überträgt dieses Zugkräfte auf die erste Welle, welche dazu führen können, dass sich die erste Welle insbesondere mittig zwischen ihren Enden durchbiegt. Um eine derartige Durchbiegung zu verhindern, ist die Mantelfläche der ersten Welle über das mindestens eine Wälzlager auf das Stützelement abgestützt. Durch diese Abstützung können die Zugkräfte auf das Stützelement übertragen werden und dadurch eine Durchbiegung der ersten Welle zuverlässig verhindert werden.

Das Stützelement ist vorzugsweise als Profilstange ausgebildet, z.B. als Vierkantprofilstange oder Rundprofilstange. Das Stützelement ist vorzugsweise am Gehäuse der Vorrichtung befestigt oder abgestützt, wobei eine Längsachse des Stützelements sich im Wesentlichen parallel zu einer Längsachse der ersten Welle erstreckt.

Das mindestens eine Wälzlager kann an der ersten Welle und/oder am Stützelement befestigt sein. Das Wälzlager ist vorzugsweise ein Radiallager, wie z.B. ein Kugellager, ein Zylinderrollenlager oder ein Nadellager. Eine Drehachse des mindestens einen Wälzlagers liegt parallel zur Längsachse der ersten Welle.

Das Stützelement ist in Förderrichtung hinter der ersten Welle und vorzugsweise in vertikaler Richtung leicht nach unten versetzt zu dieser angeordnet. Der Abstand des Stützelements zur ersten Welle ist vorzugsweise derart gewählt, dass ein Aussenkäfig des mindestens einen Wälzlagers auf der Mantelfläche der ersten Welle und/oder des Stützelements laufen kann.

Vorzugsweise ist die Mantelfläche der ersten Welle über mehr als ein Wälzlager, insbesondere über zwei, drei, vier, fünf, sechs oder mehr Wälzlager auf das Stützelement abgestützt. Die Wälzlager sind vorzugsweise in gleichmässigen Abständen zueinander in Richtung der Längsachse der ersten Welle entlang der Mantelfläche der ersten Welle angeordnet.

Durch die Verwendung einer Mehrzahl an Wälzlagern kann ein Verbiegen der ersten Welle über deren gesamte Länge zuverlässig verhindert werden. Zudem wird der Verschleiss der Wälzlager reduziert, da die durch die Wälzlager von der ersten Welle auf das Stützelement übertragene Kraft auf die Mehrzahl der Wälzlager aufgeteilt wird.

Vorzugsweise ist das mindestens eine Wälzlager am Stützelement befestigt, wobei die Mantelfläche der ersten Welle auf einem Aussenkäfig des mindestens einen Wälzlagers läuft. Durch die Anordnung des mindestens einen Wälzlagers auf dem Stützelement ist dieses fixiert. Versuche haben gezeigt, dass eine Anordnung des mindestens einen Wälzlagers an der ersten Welle zu Schwingungen der ersten Welle führen kann, was negative Auswirkungen auf den Aufwickelprozess haben kann.

Vorzugsweise ist ein Innenkäfig des mindestens einen Wälzlagers am Stützelement lösbar befestigt, beispielsweise mittels einer Schraube, so dass das mindestens eine Wälzlager einfach ausgetauscht werden kann. Vorzugsweise verfügt das Stützelement über mindestens eine Kerbe, in deren Hohlraum das mindestens eine Wälzlager angeordnet ist.

Wie aus dem Stand der Technik bekannt besteht ein Wälzlager aus einem Innenkäfig und einem Aussenkäfig, welche relativ zueinander drehbar sind, wobei zwischen Innenkäfig und Aussenkäfig eine Mehrzahl an Wälzkörpern angeordnet sind, z.B. Kugeln, Rollen oder ähnlich.

Vorzugsweise ist das Stützelement als längliches Profil ausgebildet, dessen Längsachse parallel zu einer Längsachse der ersten Welle liegt. Die Vorrichtung verfügt vorzugsweise über mindestens zwei Wälzlager, wobei diese mindestens zwei Wälzlager vorzugsweise in einer Richtung, die im rechten Winkel zur Längsachse des Stützelements liegt, relativ zueinander versetzt auf dem Stützelement angeordnet sind.

Durch die versetzte Anordnung der Wälzlager wird die erste Welle zwischen den Wälzlagern zentriert und optimal an mindestens zwei Stellen auf ihrer Mantelfläche abgestützt. Dadurch kann eine Verbiegung der ersten Welle zuverlässig verhindert werden, wobei auch eine Schwingbewegung insbesondere im mittleren Bereich der ersten Welle verhindert wird.

Sofern mehr als zwei Wälzlager vorhanden sind, so sind diese abwechselnd relativ zueinander versetzt angeordnet. Das heisst, dass eine erste Teilmenge der Wälzlager in Längsrichtung des Stützelements gesehen entlang einer ersten Linie hintereinander angeordnet sind und eine zweite Teilmenge der Wälzlager entlang einer zweiten Linie hintereinander angeordnet sind, wobei die erste und die zweite Linie parallel relativ zueinander und parallel zur Längsachse des Stützelements, jedoch beide versetzt zur Längsachse verlaufen.

Vorzugsweise sind die erste Welle und das Stützelement miteinander über mindestens ein Verbindungselement fix relativ zueinander verbunden. Das mindestens eine Verbindungselement ist vorzugsweise entlang einer Gleitführung eines Gehäuses der Vorrichtung derart verschiebbar gelagert, dass die erste Welle im ersten Abstand parallel zur Mantelfläche der ersten Zuführwalze bewegt werden kann.

Durch das mindestens eine Verbindungselement bilden die erste Welle sowie das Stützelement eine fest verbundene Einheit, so dass stets sichergestellt werden kann, dass das Stützelement im korrekten Abstand relativ zur ersten Welle positioniert ist, so dass das mindestens eine Wälzlager die erste Welle optimal am Stützelement abstützen kann.

Vorzugsweise sind die erste Welle und das Stützelement über zwei Verbindungselemente fix relativ zueinander verbunden, wobei die zwei Verbindungselemente vorzugsweise an den Enden der ersten Welle sowie des Stützelements angeordnet sind. Die Verbindungselemente umfassen vorzugsweise Drehlager, mit denen die erste Welle drehend an den Verbindungselementen gelagert ist.

Die Gleitführung weist vorzugsweise einen Radius auf, der derart gewählt ist, dass die erste Welle im ersten Abstand parallel zur Mantelfläche der ersten Zuführwalze bewegt werden kann. Dadurch kann die Position der ersten Welle insbesondere in vertikaler Richtung relativ zur ersten Zuführwalze eingestellt werden.

Die untere Wickeleinheit verfügt vorzugsweise über eine fünfte Welle, welche zwischen der ersten Welle und der zweiten Welle angeordnet ist und auf welcher die obere Bandstrecke des mindestens einen ersten Wickelbandes läuft. Die fünfte Welle ist derart angeordnet, dass die obere Bandstrecke des mindestens einen ersten Wickelbandes durch die fünfte Welle teilweise umgelenkt wird, so dass ein erster Teil der oberen Bandstrecke zwischen der ersten Welle und der fünften Welle einen stumpfen Winkel relativ zu einem zweiten Teil der oberen Bandstrecke zwischen der fünften Welle und der zweiten Welle aufweist.

Durch die Anordnung der fünften Welle und der damit einhergehenden Umlenkung der oberen Bandstrecke des mindestens einen ersten Wickelbandes ist der vertikale Abstand zwischen der oberen Bandstrecke des mindestens einen ersten Wickelbandes zur unteren Bandstrecke des mindestens einen zweiten Wickelbandes im Bereich der fünften Welle kleiner als im Bereich der ersten Welle. Dadurch wird die eingeschlagene Kante der Teigstücke zuverlässig von der unteren Bandstrecke des mindestens einen zweiten Wickelbandes erfasst. Ferner wird der Teig nach der ersten Wicklung zusammengedrückt, so dass die erste Wicklung besonders eng wird.

Vorzugsweise ist die die fünfte Welle in Förderrichtung maximal 20%, insbesondere maximal 10% des Abstandes zwischen erster Welle und zweiter Welle von der ersten Welle beanstandet. Bei einem derartigen Abstand wird eine besonders effiziente und gute Wicklung der Teigstücke zu Teigprodukten erzielt.

Vorzugsweise liegt die dritte Welle in Förderrichtung vor der ersten Welle und die vierte Welle in Förderrichtung hinter der zweiten Welle. Dadurch ist das mindestens eine zweite Wickelband und damit auch dessen untere Bandstrecke länger als das erste Wickelband sowie dessen obere Bandstrecke.

Die dritte Welle und/oder die vierte Welle ist/sind vorzugsweise vertikal verschiebbar an einem Gehäuse der Vorrichtung gelagert. Dadurch lassen sich der vertikale Abstand sowie der Winkel der oberen Bandstrecke des mindestens einen ersten Wickelbandes relativ zur unteren Bandstrecke des mindestens einen zweiten Wickelbandes verändern. Dies erlaubt die Verwendung der Vorrichtung zur Herstellung von gewickelten Teigprodukten mit unterschiedlichen Durchmessern und Grössen. Zudem lässt sich die Geometrie des Wickelraumes gezielt je nach dem Verwendeten Teig, dessen Dicke und rheologische Eigenschaften optimal einstellen.

Vorzugsweise verfügt die Vorrichtung über eine zweite Zuführwalze, welche vertikal oberhalb der ersten Zuführwalze vorzugsweise vertikal verschiebbar angeordnet ist, so dass zwischen der ersten Zuführwalze und der zweiten Zuführwalze ein Walzenspalt gebildet wird, der insbesondere einstellbar ist. Die zweite Zuführwalze wird vorzugsweise durch einen vierten Antrieb angetrieben. Der vierte Antrieb sowie der dritte Antrieb der ersten Zuführwalze können beide als Getriebe ausgestaltet sein, welche von einem gemeinsamen Motor angetrieben wird. Dieser gemeinsame Motor kann in gewissen Ausführungsformen, bei denen der erste Antrieb und der zweite Antrieb als Getriebe ausgestaltet sind, zudem auch den als Getriebe ausgestalteten ersten und zweiten Antrieb antreiben. Insbesondere können der dritte Antrieb sowie der vierte Antrieb als Kettenräder, Zahnriemenräder oder -scheiben ausgestaltet sein.

Durch den Walzenspalt kann sichergestellt werden, dass alle Teigstücke, die der oberen Bandstrecke des mindestens einen ersten Wickelbandes zugeführt wird, alle dieselbe Dicke aufweisen. Dadurch kann erzielt werden, dass alle gewickelten Teigstücke im Wesentlichen denselben Durchmesser und dieselbe Anzahl an Wicklungen aufweisen.

Vorzugsweise sind die untere Wickeleinheit und die obere Wickeleinheit als aus der Vorrichtung herausnehmbare Einheiten ausgebildet, wobei die zweite Welle sowie die vierte Welle jeweils auf eine an einem ihrer Enden mit einem Gehäuse der Vorrichtung insbesondere drehbar verbundenen Antriebswellen aufschiebbar sind und die Wickeleinheiten im Bereich der ersten Welle bzw. der dritten Welle auf jeweils mindestens eine Auflagefläche des Gehäuses auflegbar sind.

Diese Ausführungsform erlaubt eine einfachere Wartung und Reinigung der unteren und oberen Wickeleinheiten sowie von deren Komponenten. Die Antriebswellen sowie die zweite und vierte Welle verfügen vorzugsweise über Formschlussmittel, mit denen die zweite bzw. die vierte Welle mit der entsprechenden Antriebswelle derart verbunden werden können, dass sich eine Drehbewegung der Antriebswelle auf die zweite bzw. vierte Welle überträgt. Als Formschlussmittel wird vorzugsweise ein Bajonettverschluss verwendet. Dadurch, dass die untere Wickeleinheit im Bereich der ersten Welle bzw. die obere Wickeleinheit im Bereich der dritten Welle lediglich auf die mindestens eine Auflagefläche aufgelegt sind, ist das Einsetzen und Ausbauen der Wickeleinheiten sehr einfach und schnell zu bewerkstelligen.

Vorzugsweise ist die mindestens eine Auflagefläche vertikal verschiebbar am Gehäuse befestigt. Dadurch lässt sich die Position der ersten Welle sowie der dritten Welle in vertikaler Richtung zusätzlich fein einstellen.

Vorzugsweise verfügt die untere Wickeleinheit über eine Mehrzahl an ersten Wickelbändern, welche insbesondere einen runden Querschnitt aufweisen, wobei die erste und die zweite und allenfalls auch die fünfte Welle über eine der Anzahl an ersten Wickelbändern entsprechende Anzahl an umlaufenden Rillen verfügen, in denen die ersten Wickelbänder teilweise laufen, wobei die umlaufenden Rillen vorzugsweise in regelmässigen Abständen in Richtung der Längsachse der jeweiligen Welle auf deren Mantelfläche angeordnet sind.

Bei dieser Ausführungsform ist demnach nicht ein einzelnes erstes Wickelband um die erste und die zweite Welle gespannt, sondern eine Mehrzahl an nebeneinander angeordneter erster Wickelbänder. Die einzelnen ersten Wickelbänder sind in der Richtung der Längsausdehnung der ersten und zweiten Welle jeweils in einem Abstand relativ zueinander angeordnet, womit zwischen den einzelnen ersten Wickelbändern jeweils eine Lücke besteht.

Die ersten Wickelbänder weisen bei dieser Ausführungsform vorzugsweise einen runden Querschnitt auf. Dadurch können als erste Wickelbänder beispielsweise Kordeln, Schnüre oder Seile, insbesondere aus einem lebensmittelverträglichen Material verwendet werden.

Damit sich die ersten Wickelbänder entlang der ersten bzw. zweiten Welle bei Betrieb der Vorrichtung nicht verschieben, weisen die erste und die zweite Welle sowie allenfalls auch die fünfte Welle vorzugsweise Rillen auf, in denen die ersten Wickelbänder teilweise laufen und dadurch auf den Wellen geführt werden. Die Rillen weisen vorzugsweise eine Tiefe sowie Breite auf, welche dem Durchmesser der ersten Wickelbänder entspricht. Bei gewissen Ausführungsformen kann die Tiefe der Rillen jedoch auch kleiner sein als der Durchmesser der ersten Wickelbänder. In diesem Fall beträgt die Tiefe der Rillen jedoch mindestens 15% des Durchmessers der ersten Wickelbänder, damit diese eine zuverlässige Führung der ersten Wickelbänder auf den Wellen gewährleisten.

Vorzugsweise verfügt die obere Wickeleinheit über eine Mehrzahl an zweiten Wickelbändern, welche insbesondere einen runden Querschnitt aufweisen, wobei die dritte und die vierte Welle über eine der Anzahl an ersten Wickelbändern entsprechende Anzahl an umlaufenden Rillen verfügen, in denen die zweiten Wickelbänder teilweise laufen, wobei die umlaufenden Rillen vorzugsweise in regelmässigen Abständen in Richtung der Längsachse der jeweiligen Welle auf deren Mantelfläche angeordnet sind.

Bei dieser Ausführungsform ist demnach nicht ein einzelnes zweites Wickelband um die dritte und die vierte Welle gespannt, sondern eine Mehrzahl an nebeneinander angeordneter zweiter Wickelbänder. Die einzelnen zweiten Wickelbänder sind in der Richtung der Längsausdehnung der dritten und vierten Welle jeweils in einem Abstand relativ zueinander angeordnet, womit zwischen den einzelnen zweiten Wickelbändern jeweils eine Lücke besteht.

Die zweiten Wickelbänder weisen bei dieser Ausführungsform vorzugsweise einen runden Querschnitt auf. Dadurch können als zweite Wickelbänder beispielsweise Kordeln, Schnüre oder Seile, insbesondere aus einem lebensmittelverträglichen Material verwendet werden.

Damit sich die zweiten Wickelbänder entlang der dritten bzw. vierten Welle bei Betrieb der Vorrichtung nicht verschieben, weisen die dritte und die vierte Welle vorzugsweise Rillen auf, in denen die zweiten Wickelbänder teilweise laufen und dadurch auf den Wellen geführt werden. Die Rillen weisen vorzugsweise eine Tiefe sowie Breite auf, welche dem Durchmesser der zweiten Wickelbänder entspricht. Bei gewissen Ausführungsformen kann die Tiefe der Rillen jedoch auch kleiner sein als der Durchmesser der zweiten Wickelbänder. In diesem Fall beträgt die Tiefe der Rillen jedoch mindestens 15% des Durchmessers der zweiten Wickelbänder, damit diese eine zuverlässige Führung der zweiten Wickelbänder auf den Wellen gewährleisten.

Sofern sowohl die untere wie auch die obere Wickeleinheit über eine Mehrzahl an ersten bzw. zweiten Wickelbändern verfügen, so ist die Anzahl der ersten Wickelbänder vorzugsweise gleich der Anzahl der zweiten Wickelbänder, wobei die ersten Wickelbänder vorzugsweise denselben Querschnitt sowie dieselben Dimensionen, insbesondere denselben Durchmesser wie die zweiten Wickelbänder aufweisen.

Vorzugsweise verfügt die untere Wickeleinheit in Förderrichtung hinter der zweiten Welle über einen flächigen Abweiser, der sich in Förderrichtung in einem Winkel vom Wickelraum weg erstreckt.

Mittels des Abweisers kann verhindert werden, dass gewickelte Teigprodukte, welche vom mindestens einen ersten Wickelband hinunterfallen, z.B. auf ein Backblech oder ein Förderband, durch den Fall beschädigt werden oder gar in Richtung der unteren Wickeleinheit zurückspringen. Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Darstellung einer ersten Ausführungsform einer erfindungsgemässen Vorrichtung von der Seite;
- Fig. 2: eine schematische Darstellung einer zweiten Ausführungsform einer erfindungsgemässen Vorrichtung von der Seite;
- Fig. 3: eine perspektivische Ansicht einer dritten Ausführungsform einer erfindungsgemässen Vorrichtung;
- Fig. 4: die dritte Ausführungsform der erfindungsgemässen Vorrichtung gemäss der Fig. 3, jedoch von der gegenüberliegenden Seite in einer perspektivischen Darstellung;
- Fig. 5: eine perspektivische Detailansicht der dritten Ausführungsform der erfindungsgemässen Vorrichtung;
- Fig. 6: ein Schnittbild der Detailansicht von Fig. 5;
- Fig. 7: eine Vergrösserung des Bereichs zwischen den Zuführwalzen sowie den Wickeleinheiten gemäss der Fig. 6 ohne Verbindungselement;
- Fig. 8: eine Detailansicht des Stützelements mit der ersten Welle gemäss der dritten Ausführungsform der erfindungsgemässen Vorrichtung;
- Fig. 9: zeigt das Stützelement gemäss der Fig. 8 in einer perspektivischen Ansicht ohne die erste Welle;
- Fig. 10: die mit Antriebswellen verbundenen und auf Auflageflächen aufgelegten Wickeleinheiten in einer seitlichen Darstellung.

Grundsätzlich sind in den Figuren gleiche Teile mit gleichen Bezugszeichen versehen.

### Wege zur Ausführung der Erfindung

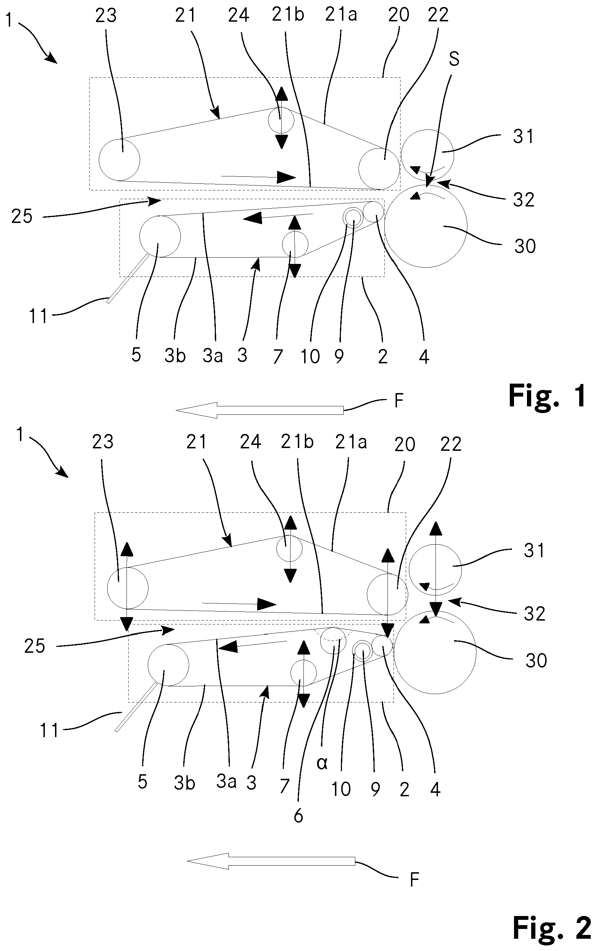

Die Fig. 1 zeigt eine schematische Darstellung einer ersten Ausführungsform einer erfindungsgemässen Vorrichtung 1 von der Seite. Die Vorrichtung 1 verfügt über eine untere Wickeleinheit 2 mit einem ersten Wickelband 3. Das erste Wickelband 3 ist um eine erste Welle 4 und um eine zweite Welle 5 gespannt. Durch die Umlenkung durch die erste Welle 4 sowie durch die zweite Welle 5 weist das erste Wickelband 3 eine obere Bandstrecke 3a sowie eine untere Bandstrecke 3b auf. Damit die Spannung des ersten Wickelbandes 3 eingestellt werden kann, verfügt die untere Wickeleinheit über eine erste Spannwelle 7, welche in vertikaler Richtung verstellbar ist (angedeutet durch Doppelpfeil) und auf welcher die untere Bandstrecke 3b läuft. Weiter umfasst die untere Wickeleinheit 2 einen ersten Antrieb (auf der Figur nicht dargestellt), mit welchem sich die zweite Welle 5 drehend antreiben lässt. Der erste Antrieb ist derart ausgestaltet, dass die obere Bandstrecke 3a des ersten Wickelbandes 3 in eine Förderrichtung F bewegt wird. Dementsprechend bewegt sich die untere Bandstrecke 3b entgegen der Förderrichtung F.

Die erste Welle 4 weist einen kleinen Durchmesser von unter 15mm auf. Um eine Durchbiegung der ersten Welle 4 durch die auf dieser vom ersten Wickelband 3 ausgeübten Zugkräfte (welche im Wesentlichen in der Förderrichtung F wirken) zu verhindern, verfügt die untere Wickeleinheit 2 über ein Stützelement 9, auf welchem mehrere Wälzlager 10 (von denen in der Figur nur eines sichtbar ist) entlang der Länge des Stützelements 9 angeordnet sind. Die Aussenkäfige der Wälzlager 9 laufen auf einer Mantelfläche der ersten Welle 4. Das Stützelement ist in Förderrichtung F hinter der ersten Welle 4 sowie in vertikaler Richtung weiter unten angeordnet als die erste Welle 4. Der Abstand zwischen der ersten Welle 4 und dem Stützelement 9 ist derart, dass eine Umfangsfläche der Aussenkäfige der Wälzlager 10 die Mantelfläche der ersten Welle 4 berühren und auf dieser laufen.

Die Vorrichtung 1 umfasst ferner eine obere Wickeleinheit 20 mit einem zweiten Wickelband 21. Das zweite Wickelband 21 ist um eine dritte Welle 22 und um eine vierte Welle 23 gespannt. Durch die Umlenkung des zweiten Wickelbandes 21 durch die dritte Welle 22 sowie durch die vierte Welle 23 weist das zweite Wickelband 21 eine obere Bandstrecke 21a sowie eine untere Bandstrecke 21b auf. Damit die Spannung des zweiten Wickelbandes 21 eingestellt werden kann, verfügt die obere Wickeleinheit 20 über eine zweite Spannwelle 24, welche in vertikaler Richtung verstellbar ist (angedeutet durch Doppelpfeil) und auf welcher die obere Bandstrecke 21a läuft. Weiter umfasst die obere Wickeleinheit 20 einen zweiten Antrieb (auf der Figur nicht dargestellt), mit welchem sich die vierte Welle 23 drehend antreiben lässt. Der zweite Antrieb ist derart ausgestaltet, dass die untere Bandstrecke 21b des zweiten Wickelbandes 21 entgegen der Förderrichtung F bewegt wird. Dementsprechend bewegt sich die obere Bandstrecke 21a entgegen in Förderrichtung F.

Die obere Wickeleinheit 20 ist in vertikaler Richtung oberhalb der ersten Wickeleinheit 2 derart angeordnet, dass die obere Bandstrecke 3a des ersten Wickelbandes 3 zur unteren Bandstrecke 21b des zweiten Wickelbandes 21 beabstandet ist. Durch diesen Abstand wird ein Wickelraum 25 gebildet, in welchem Teigstücke mittels der in entgegengesetzter Richtung bewegten oberen Bandstrecke 3a des ersten Wickelbandes 3 und unteren Bandstrecke 21b des zweiten Wickelbandes 21 zu gewickelten Teigprodukten aufgewickelt werden.

Um Teigstücke in den Wickelraum 25 einzubringen verfügt die Vorrichtung 1 über eine erste Zuführwalze 30, welche in Förderrichtung F vor der ersten Welle 4 angeordnet ist. Die erste Zuführwalze 30 ist derart angeordnet, dass ein oberer Scheitelpunkt S der ersten Zuführwalze 30 vertikal oberhalb der ersten Welle 4 liegt. Die erste Zuführwalze 4 ist relativ zur unteren Wickeleinheit 2 derart angeordnet, dass ein horizontaler Abstand in Förderrichtung F zwischen der Mantelfläche der ersten Zuführwalze 30 und dem ersten Wickelband 3 5mm oder weniger beträgt.

Die erste Zuführwalze 30 wird über einen dritten Antrieb (in der Figur nicht gezeigt) derart angetrieben, dass eine vertikal obere Hälfte der ersten Zuführwalze 30 in der Förderrichtung F drehend bewegt wird (durch gekrümmten Pfeil symbolisch dargestellt).

Vertikal oberhalb der ersten Zuführwalze 30 ist eine zweite Zuführwalze 31 angeordnet, welche in vertikaler Richtung verschiebbar an der Vorrichtung 1 gelagert ist. Zwischen der ersten Zuführwalze 30 und der zweiten Zuführwalze 31 liegt ein Walzenspalt 32, dessen Höhe durch eine Verstellung der zweiten Zuführwalze 31 in vertikaler Richtung verändert werden kann. Die zweite Zuführwalze 31 wird durch einen vierten Antrieb (nicht gezeigt) derart angetrieben, dass eine im Querschnitt unten liegende Hälfte der zweiten Zuführwalze 31 in der Förderrichtung F drehend bewegt wird (durch gekrümmten Pfeil symbolisch dargestellt). Mittels des Walzenspaltes 32 kann sichergestellt werden, dass alle Teigstücke, die mittels der Zuführwalzen 30, 31 dem Wickelraum 25 zugeführt werden, über dieselbe maximale Dicke verfügen.

Wird nun ein Teigstück der ersten Zuführwalze 30 zugeführt, so wird dieses durch Drehung der ersten Zuführwalze 30 in Richtung der ersten Welle 4 bewegt, bis eine in Förderrichtung F vorne liegende Kante des Teigstücks auf die obere Bandstrecke 3a des ersten Wickelbandes 3 auftrifft. Durch das Auftreffen der vorderen Kante des Teigstücks auf die obere Bandstrecke 3a und dem Weiterfördern des Teigstücks wird die vordere Kante des Teigstücks nach oben umgebogen und anschliessend durch die untere Bandstrecke 21b des zweiten Wickelbandes 21 erfasst. Da die untere Bandstrecke 21b des zweiten Wickelbandes 21 entgegen der Förderrichtung und somit in der entgegengesetzten Richtung der oberen Bandstrecke 3a des ersten Wickelbandes 3 bewegt wird, wird das Teigstück in der Folge aufgewickelt, während dieses innerhalb des Wickelraumes 25 in Förderrichtung gefördert wird. Am Ende des Aufwickelvorganges erreicht das nun zu einem gewickelten Teigprodukt aufgewickelte Teigstück das Ende der oberen Bandstrecke 3a des ersten Wickelbandes 3 im Bereich der zweiten Welle 5 und fällt anschliessend vom ersten Wickelband 3. In der Praxis wird in Förderrichtung F hinter der Vorrichtung 1 ein Backblech oder ein weiteres Fördermittel angeordnet sein, auf welches die gewickelten Teigstücke fallen. Um eine Beschädigung der gewickelten Teigstücke sowie ein Zurückprallen in Richtung der Vorrichtung 1 zu verhindern, ist in Förderrichtung F hinter dem Wickelraum ein flächiger Abweiser 11, insbesondere in der Form eines rechteckigen Textilstücks, angeordnet. Der Abweiser 11 erstreckt sich in Förderrichtung F in einem Winkel vom Wickelraum 25 und vertikal nach unten gerichtet von diesem weg.

Die Fig. 2 eine schematische Darstellung einer zweiten Ausführungsform einer erfindungsgemässen Vorrichtung 1 von der Seite. Die zweite Ausführungsform ist im Wesentlichen gleich wie die in Fig. 1 gezeigte Ausführungsform mit dem Unterschied, dass die untere Wickeleinheit 2 über eine fünfte Welle 6 verfügt, auf der die obere Bandstrecke 3a des ersten Wickelbandes 3 läuft. Die fünfte Welle 6 liegt in Förderrichtung F hinter der ersten Welle und in vertikaler Richtung vertikal nach oben zu dieser versetzt. Durch die fünfte Welle 6 wird die obere Bandstrecke 3a des ersten Wickelbandes leicht umgelenkt, so dass diese zwei Teile aufweist, welche in einem Winkel α relativ zueinander verlaufen. Dadurch nimmt der Abstand zwischen der oberen Bandstrecke 3a des ersten Wickelbandes 3 und der unteren Bandstrecke 21b des zweiten Wickelbandes 21 in Förderrichtung von der ersten Welle 4 zur fünften Welle 6 hin ab, um anschliessend wieder von der fünften Welle 6 zur zweiten Welle 5 hin wieder zu zunehmen. Dadurch wird eine erste Wicklung der Teigstücke zuverlässig angedrückt. Die fünfte Welle 6 liegt hierbei wesentlich näher zur ersten Welle 4 als zur zweiten Welle 5. Der Abstand zwischen der ersten Welle 4 zur fünften Welle 6 beträgt insbesondere weniger als 20% des Abstandes zwischen der ersten Welle 4 und der zweiten Welle 5

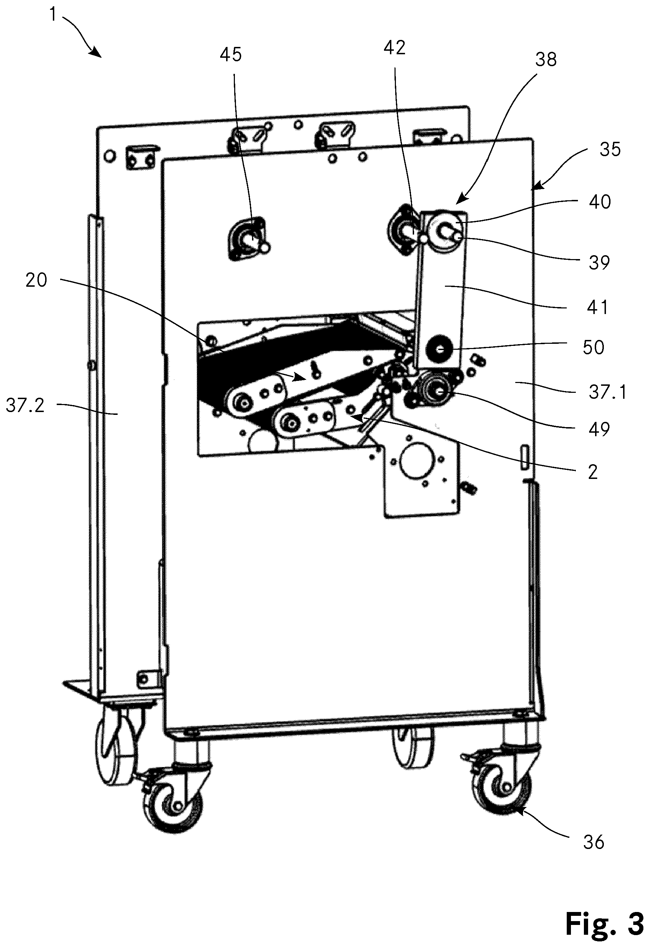

Die Fig. 3 zeigt eine perspektivische Ansicht einer dritten Ausführungsform einer erfindungsgemässen Vorrichtung 1. Die Vorrichtung 1 umfasst ein Gehäuse 35, welches bei der gezeigten Ausführungsform über zwei Seitenwände 37.1, 37.2 verfügt, welche über Querstreben (nicht sichtbar) miteinander verbunden sind. Das Gehäuse 35 verfügt über Rollen 36, mit welchen die Vorrichtung 1 einfach verschoben werden kann. Bei der gezeigten Ausführungsform sind zwei der vier Rollen 36 mit einer Bremse ausgestattet, damit die Vorrichtung 1 sicher an einer definierten Stelle arretiert werden kann.

Eine erste Seitenwand 37.1 verfügt über eine Zugangsöffnung, welche in der Fig. 3 offen gezeigt ist. Diese Zugangsöffnung kann zur Erhöhung der Sicherheit im Betrieb mittels eines Deckels oder ähnlich verschlossen werden. Durch diese Zugangsöffnung sind die untere Wickeleinheit 2 sowie die obere Wickeleinheit 20 sichtbar.

Auf der ersten Seitenwand 37.1 ist weiter eine erste Verstelleinheit 38 für die vertikale Verstellung der zweiten Zuführwalze 31 angeordnet. Diese erste Verstelleinheit 38 umfasst eine drehbar am Gehäuse 35 gelagerte erste Stellwelle 39. Am Ende der ersten Stellwelle 39, welche von der ersten Seitenfläche 37.1 hervorsteht, ist eine erste Exzenterscheibe 40 angeordnet, welche mit einer Öffnung an einem ersten Ende eines ersten Stellarms 41 zusammenwirkt. Eine Achse 48 der zweiten Zuführwalze 31 ist im Bereich eines zweiten Endes des ersten Stellarms 41 drehend gelagert. Durch eine Drehung der ersten Stellwelle 39 wird die erste Exzenterscheibe 40 innerhalb der Öffnung gedreht, wodurch der erste Stellarm 41 bewegt wird. Diese Bewegung umfasst eine vertikale Komponente, welche zu einer vertikalen Bewegung der Achse 48 der zweiten Zuführwalze 31 führt. Um eine Bewegung der zweiten Zuführwalze 31 in horizontaler Richtung zu verhindern, ist die Achse 47 der zweiten Zuführwalze 31 innerhalb einer vertikal ausgerichteten Linearführung gelagert. Auf der zweiten Seitenwand 37.2 des Gehäuses ist eine analoge Anordnung vorgesehen, damit die zweite Zuführwalze 31 parallel zur ersten Zuführwalze 30 verschoben werden kann.

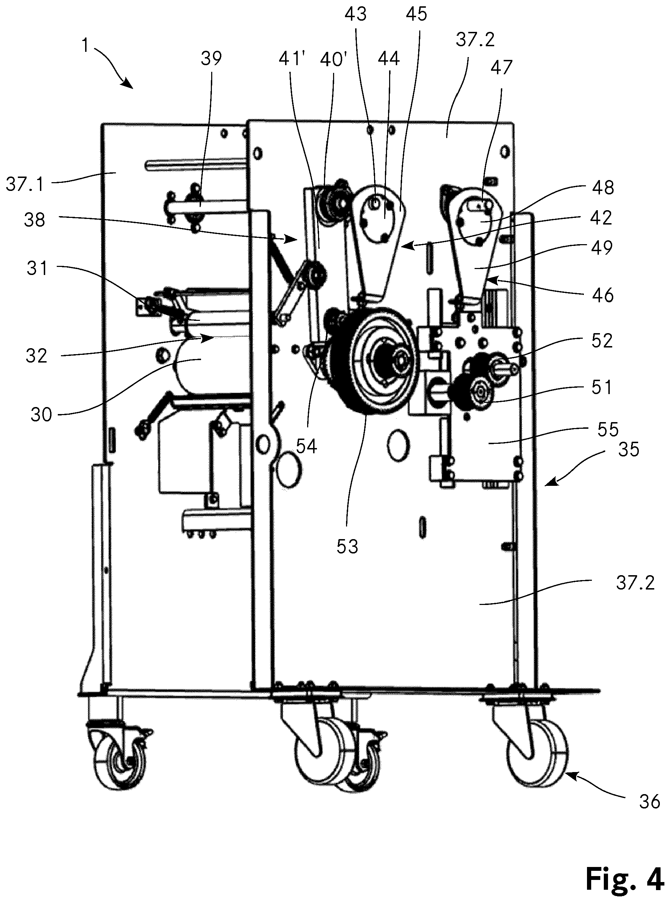

Die Fig. 4 zeigt die dritte Ausführungsform der erfindungsgemässen Vorrichtung 1 gemäss der Fig. 3, jedoch von der gegenüberliegenden Seite in einer perspektivischen Darstellung. Auf der zweiten Seitenwand 37.2 sind wiederum eine erste Exzenterscheibe 40', welche mittels der ersten Verstellwelle 39 innerhalb einer Öffnung eines ersten Stellarmes 41' gedreht werden kann, angeordnet. Diese Komponenten sind Teil der ersten Verstelleinheit 38, welche im Wesentlichen gleich ausgeführt sind, wie auf der ersten Seitenwand 37.1. Mittels der ersten Verstelleinheit 38 kann die Höhe des zwischen der ersten Zuführwalze 30 und der zweiten Zuführwalze 31 liegenden Walzenspaltes 32 verändert werden.

Weiter befinden sich auf der zweiten Seitenwand 37.2 eine zweite Verstelleinheit 42, mit welcher die vertikale Position der oberen Wickeleinheit 20 im Bereich der dritten Welle 22 verstellt werden kann. Die zweite Verstelleinheit 42 umfasst eine zweite Einstellwelle 43, welche drehbar am Gehäuse 35 gelagert ist und an deren Ende, welches aus der zweiten Seitenwand 37.2 vorsteht eine zweite Exzenterscheibe 44 befestigt ist. Die zweite Exzenterscheibe 44 ist drehend in eine Öffnung eines zweite Stellarmes 45 drehend gelagert, wobei ein anderes Ende des zweiten Stellarmes 45 mit der oberen Wickeleinheit 20 im Bereich der dritten Welle 22 verbunden ist. Wie bei der ersten Verstelleinheit 38 kann durch Drehung der zweiten Einstellwelle 43 der zweite Stellarm 45 bewegt werden, so dass eine Verschiebung der oberen Wickeleinheit 20 im Bereich der dritten Welle 22 in vertikaler Richtung erfolgt.

Auf der der zweiten Seitenwand 37.2 ist eine dritte Verstelleinheit 46 angeordnet, mit welcher die vertikale Position der oberen Wickeleinheit 20 im Bereich der vierten Welle 23 verstellt werden kann. Die dritte Verstelleinheit 46 umfasst eine dritte Einstellwelle 47, welche drehbar am Gehäuse 35 gelagert ist und an deren Ende, welches aus der zweiten Seitenwand 37.2 vorsteht eine dritte Exzenterscheibe 48 befestigt ist. Die dritte Exzenterscheibe 48 ist drehend in eine Öffnung eines dritten Stellarmes 49 drehend gelagert, wobei ein anderes Ende des dritten Stellarmes 49 mit einer Verstellplatte 55 verbunden, an welcher die vierte Welle 23 der oberen Wickeleinheit 20 drehend gelagert ist. Wie bei der ersten Verstelleinheit 38 sowie der zweiten Verstelleinheit 42 kann durch Drehung der dritten Einstellwelle 47 der dritte Stellarm 48 bewegt werden, so dass eine Verschiebung der oberen Wickeleinheit 20 im Bereich der vierten Welle 23 in vertikaler Richtung erfolgt.

In der Figur erkennbar sind auch ein erster Antrieb 51 für die zweite Welle 5, ein zweiter Antrieb 52 für die vierte Welle 23, ein dritter Antrieb 53 für die erste Zuführwalze 30 sowie ein vierter Antrieb 54 für die obere Zuführwalze 31. Alle Antriebe 51, 52, 53, 54 sind als Zahnriemenräder ausgestaltet. Mittels entsprechender Zahnriemen können somit die Antriebe 51, 52, 53, 54 an den Abtrieb eines einzelnen Motors (nicht gezeigt), wie beispielsweise einen Elektromotor wirkverbunden werden.

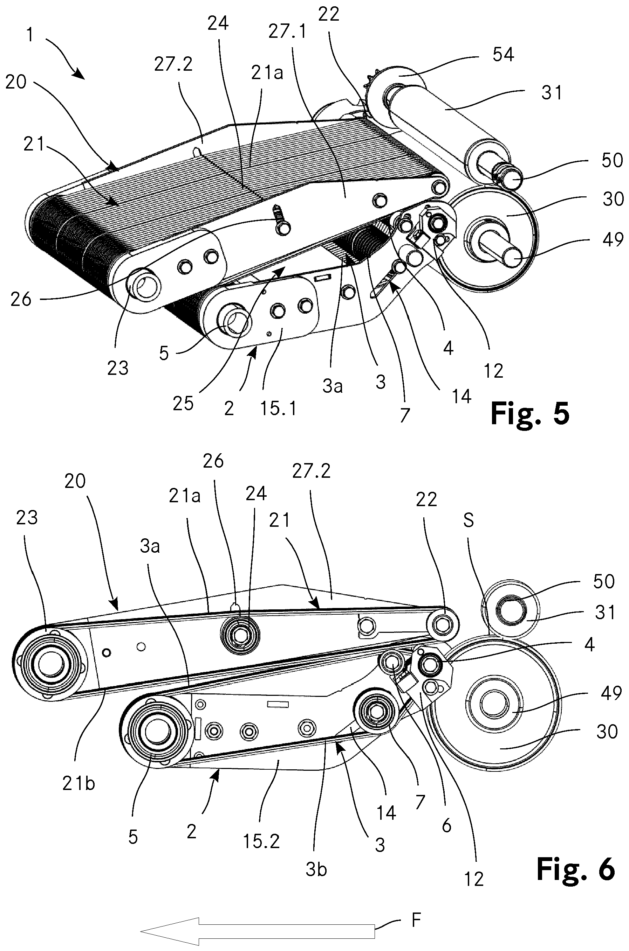

Die Figuren 5 und 6 zeigen Detailansichten der dritten Ausführungsform der erfindungsgemässen Vorrichtung gemäss der Fig. 4. In diesen Figuren sind lediglich die beiden Wickeleinheiten 2, 20 sowie die Zuführwalzen 30, 31 dargestellt. Die Fig. 5 ist eine perspektivische Darstellung, während die Fig. 6 ein Schnittbild von der Seite zeigt.

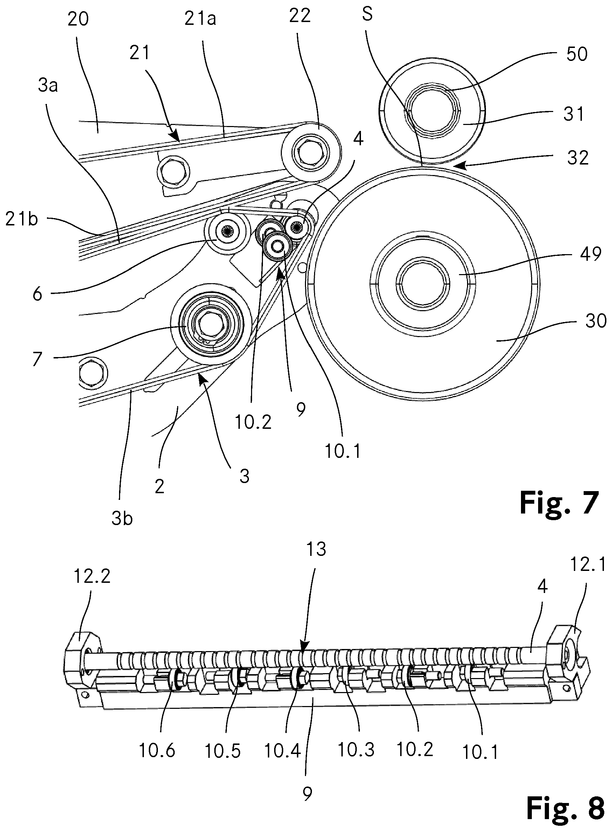

Wie in der Fig. 5 erkennbar ist, verfügt die untere Wickeleinheit 2 über eine Mehrzahl an erste Wickelbänder 3, welche in Längsrichtung der ersten Welle 4 und der zweiten Welle 5 in regelmässigen Abständen relativ zueinander um die Wellen 4, 5 gespannt sind. Damit die Mehrzahl an ersten Wickelbänder 3 nicht verrutschen, verfügen die erste Welle 4, die zweite Welle 5, die erste Spannwelle 7 sowie die fünfte Welle 6 über eine Mehrzahl an Rillen (siehe Fig. 8) in denen die ersten Wickelbänder 3 teilweise laufen.

Die untere Wickeleinheit 2 verfügt über Seitenbleche 15.1, 15.2 (, an denen die Wellen 4, 5, 6, 7 der ersten Wickeleinheit 2 gelagert sowie das Abstützelement 9 befestigt sind. Dadurch bildet die untere Wickeleinheit 2 eine aus der Vorrichtung 1 als Ganzes herausnehmbare Komponente. Auf der Figur gut erkennbar ist die als erste Führungsnut 14 ausgebildete Linearführung, mit welcher die erste Spannwelle 7 verschiebbar an den Seitenblechen 15.1, 15.2 gelagert ist. Im Bereich der ersten Welle 3 ist zudem ein Verbindungselement 12 erkennbar, an welchem die erste Welle drehbar gelagert ist und das Abstützelement 9 befestigt ist. Das Verbindungselement lässt sich relativ zum Seitenblech derart verschieben, dass die erste Welle 4 im ersten Abstand entlang der Mantelfläche der ersten Zuführwalze 30 verschiebbar ist. Dadurch lässt sich die Position der ersten Welle 4 in der vertikalen Richtung verändern, ohne dass die horizontale Position in Förderrichtung F relativ zur Mantelfläche der ersten Zuführwalze verändert wird.

Die zweite Welle 5 ist als Hohlwelle ausgebildet, welche über eine Antriebswelle (nicht gezeigt) geschoben und mit dieser drehsicher verbunden werden kann. Diese Antriebswelle ist bei der gezeigten dritten Ausführungsform mit dem in Fig. 4 gezeigten Zahnriemenrad verbunden, wobei die Antriebswelle und das Zahnriemenrad den ersten Antrieb 51 bilden.

Die obere Wickeleinheit 20 verfügt ebenfalls über eine Mehrzahl an zweite Wickelbänder 21, welche in Längsrichtung der dritten Welle 22 und der vierten Welle 23 in regelmässigen Abständen relativ zueinander um die Wellen 22, 23 gespannt sind. Damit die Mehrzahl an zweite Wickelbänder 21 nicht verrutschen, verfügen die dritte Welle 22, die vierte Welle 23 und die zweite Spannwelle 24 über eine Mehrzahl an Rillen in denen die zweiten Wickelbänder 21 teilweise laufen.

Die obere Wickeleinheit 20 verfügt über Seitenbleche 27.1, 27.2 an denen die Wellen 22, 23, 24 der oberen Wickeleinheit 20 gelagert sind. Dadurch bildet die obere Wickeleinheit 20 eine aus der Vorrichtung 1 als Ganzes herausnehmbare Komponente. Auf den Figuren 5 und 6 gut erkennbar ist die als zweite Führungsnut 26 ausgebildete Linearführung, mit welcher die zweite Spannwelle 24 verschiebbar an den Seitenblechen 27.1, 27.2 gelagert ist.

Die vierte Welle 23 ist als Hohlwelle ausgebildet, welche über eine Antriebswelle (nicht gezeigt) geschoben und mit dieser drehsicher verbunden werden kann. Diese Antriebswelle ist bei der gezeigten dritten Ausführungsform mit dem in Fig. 4 gezeigten Zahnriemenrad verbunden, wobei die Antriebswelle und das Zahnriemenrad den zweite Antrieb 52 bilden.

In den Figuren 5 und 6 ist zudem zu erkennen, dass die erste Zuführwalze 30 auf einer ersten Achse 49 befestigt ist. Die erste Achse 49 ist drehbar am Gehäuse 35 gelagert und wird über den dritten Antrieb 53 drehend angetrieben. Auch die zweite Zuführwalze 31 ist auf einer zweiten Achse 50 befestigt. Die zweite Achse 50 ist drehbar am Gehäuse 35 gelagert und wird über den vierten Antrieb 54 drehend angetrieben.

Wie auch zu erkennen ist, ist die dritte Welle 22 in Förderrichtung F vor der dritten Welle 4 und die vierte Welle 23 in Förderrichtung F hinter der zweiten Welle 5 angeordnet.

Die Fig. 7 zeigt eine Vergrösserung des Bereichs zwischen den Zuführwalzen 30, 31 sowie den Wickeleinheiten 2, 20 gemäss der Fig. 6 ohne Verbindungselement 12. Wie erkennbar ist, ist die erste Welle 4 derart angeordnet, dass deren Mantelfläche in einem kleinen Abstand von 5mm oder weniger relativ zur Mantelfläche der ersten Zuführwalze 30 und vertikal weiter unten als der obere Scheitelpunkt S der ersten Zuführwalze 30 ist.

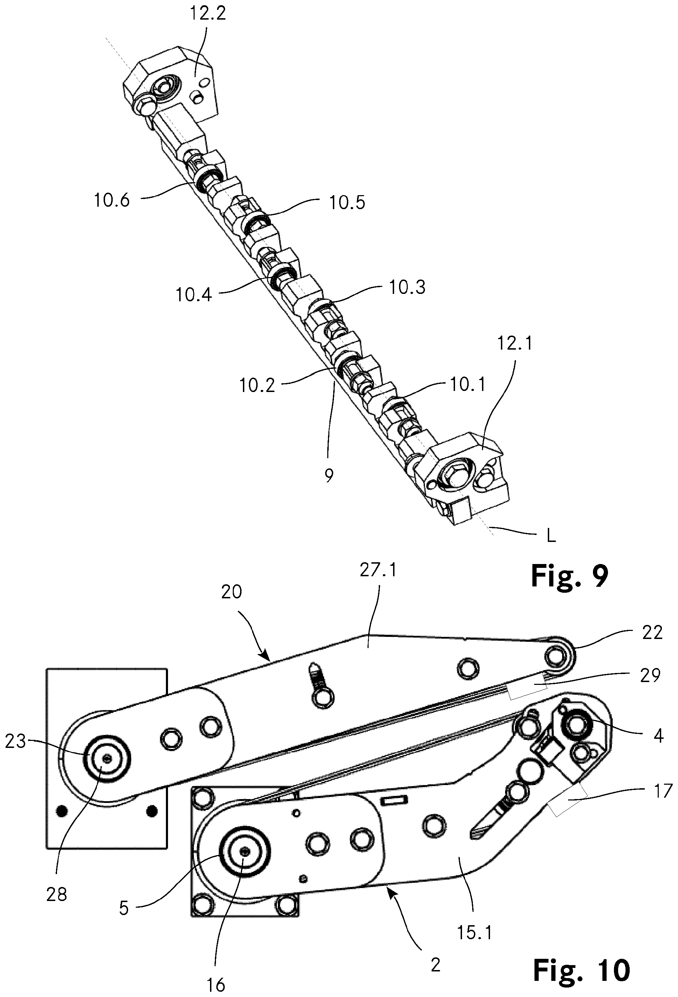

Wie der Fig. 7 entnommen werden kann, wird die erste Welle 4 von einer Mehrzahl an Wälzlager 10.1, 10.2, welche an einem Stützelement 9 angeordnet sind, abgestützt. Dabei läuft die Mantelfläche der ersten Welle 3 auf einer Aussenfläche der Aussenkäfige der Wälzlager 10.1, 10.2. Durch diese Abstützung wird verhindert, dass sich die erste Welle 4 wegen ihres geringen Durchmessers von 15mm oder weniger in Folge der von der Mehrzahl an ersten Wickelbänder 3 ausgeübten Zugkräfte durchbiegt. Wie zu erkennen ist, sind die Wälzlager 10.1, 10.2 in einer Richtung, die rechtwinklig zu ihren Drehachsen steht, relativ zueinander versetzt angeordnet (siehe Fig. 8 und 9). Dadurch läuft die erste Welle 4 zentriert zwischen den Wälzlagern 10.1, 10.2, wodurch diese zuverlässig vor einer Durchbiegung geschützt wird.

Die Fig. 8 zeigt eine Detailansicht des Stützelements 9 mit der ersten Welle 3 gemäss der dritten Ausführungsform der erfindungsgemässen Vorrichtung 1. Wie zu erkennen ist, ist die dritte Welle 3 an ihren beiden Enden drehend an den Verbindungselementen 12.1, 12.2 gelagert, insbesondere über Gleit- oder Wälzlager. Die erste Welle 4 verfügt über eine Mehrzahl an Rillen 13, in denen die ersten Wickelbänder teilweise laufen. Die zweite Welle 4, fünfte Welle 6 und erste Spannwelle 7 weisen ebenso derartige Rillen 13 auf. Die dritte Welle 22, vierte Welle 23 und zweite Spannwelle 24 der zweiten Wickeleinheit verfügen ebenfalls über im Wesentlichen gleich ausgestaltete Rillen, in denen die zweiten Wickelbänder teilweise laufen.

Das Stützelement 9 ist im Wesentlichen als Vierkantprofil ausgestaltet, welches an seinen beiden Enden mit den Verbindungselementen 12.1, 12.2 befestigt ist. Das Stützelement weist 6 Kerben auf, in denen jeweils ein Wälzlager 10.1 - 10.6 eingebracht ist. Ein Innenkäfig jedes Wälzlagers 10.1- 10.6 ist mit dem Stützelement verschraubt, während die Aussenfkäfige frei laufend sind. Der Abstand zwischen den Drehachsen der Wälzlager 10.1 - 10.6 und der Längsachse der ersten Welle 3 ist derart, dass eine Aussenfläche der Aussenkäfige der Wälzlager 10.1 - 10.6 auf der Mantelfläche der ersten Welle 3 laufen. Die Wälzlager 10.1 - 10.6 sind in Längsrichtung des Stützelements 9 derart angeordnet, dass deren Aussenkäfige die Mantelfläche der ersten Welle 3 zwischen zwei benachbarten Rillen 13 berühren. Der Abstand von zwei Wälzlagern 10.1 - 10.6 relativ zueinander ist jeweils gleich, so dass diese regelmässig entlang der Längsrichtung des Stützelements 9 verteilt sind.

Die Fig. 9 zeigt das Stützelement 9 gemäss der Fig. 8 in einer perspektivischen Ansicht ohne die erste Welle 4. Gut erkennbar ist, dass die Drehachsen der Wälzlager 10.1 - 10.6 parallel zur Längsachse L des Stützelements 9 ausgerichtet sind, wobei die Wälzlager jeweils in einer Richtung, die im rechten Winkel zur Längsachse L des Stützelements 9 liegt, relativ zueinander versetzt angeordnet sind.

Die Fig. 10 zeigt im Wesentlichen dieselbe Darstellung wie in der Fig. 5, mit dem Unterschied, dass die zweite Welle 5 der unteren Wickeleinheit 2 auf eine erste Antriebswelle 18 und die vierte Welle 23 der oberen Wickeleinheit 20 auf eine zweite Antriebswelle 28 aufgeschoben sind. Die zweite Welle 5 und die vierte Welle 23 sind drehfest mit der jeweiligen Antriebswelle 16, 28 verbunden, z.B. über ein Formschlusselement, insbesondere über einen Bajonettverschluss. Die beiden Antriebswellen 16, 28 stützen einerseits die beiden Wickeleinheiten 2, 20 ab und dienen andererseits dazu, die ersten Wickelbänder 3 sowie die zweiten Wickelbänder 21 über die jeweilige Welle 5, 23 anzutreiben.

Im Bereich der ersten Welle 3 ist die untere Wickeleinheit 2 auf einer ersten Auflagefläche 17 abgestützt. Die erste Auflagefläche 17 liegt in der Form von zwei Blöcken aus einem Polymermaterial vor, welche jeweils an einer der Seitenwände 37.1, 37.2 des Gehäuses 35 befestigt sind und auf denen eine untere Kante der Seitenbleche 15.1, 15.2 der unteren Wickeleinheit 2 aufgelegt werden können.

Im Bereich der dritten Welle 22 ist die obere Wickeleinheit 20 auf einer zweiten Auflagefläche 29 abgestützt. Die zweite Auflagefläche 29 liegt ebenfalls in der Form von zwei Blöcken aus einem Polymermaterial vor, welche mit der Verstellplatte 55 verbunden sind und auf denen eine untere Kante der Seitenbleche 27 der oberen Wickeleinheit 20 aufgelegt werden können. Die zweite Auflagefläche 29 ist drehend mit der Verstellplatte 55 verbunden, so dass die obere Wickeleinheit 20 auch bei unterschiedlichen Winkeln, das heisst bei unterschiedlichen vertikalen Positionen der zweiten Verstelleinheit 42 und dritten Verstelleinheit 46 stets über die gesamte Kontaktfläche zwischen den Seitenblechen 27.1, 27.2 der oberen Wickeleinheit 20 und der zweiten Auflagefläche 29 auf letzteren aufliegt.

## Patentansprüche

1. Vorrichtung zum Aufwickeln von Teigstücken zu gewickelten Teigprodukten, insbesondere zu Croissants, umfassend: a) eine untere Wickeleinheit (2) mit mindestens einem ersten Wickelband (3), welches um eine erste Welle (4) und um eine zweite Welle (5) gespannt ist, wobei die erste Welle (4) und/oder die zweite Welle (5) mittels eines ersten Antriebes (51) der Vorrichtung derart angetrieben wird, dass eine obere Bandstrecke (3a) des mindestens einen ersten Wickelbandes (3) von der ersten Welle (4) zur zweiten Welle (5) hin in einer Förderrichtung (F) bewegt wird; b) eine obere Wickeleinheit (20) mit mindestens einem zweiten Wickelband (21), welches um eine dritte Welle (22) und um eine vierte Welle (23) gespannt ist, wobei die dritte Welle (22) und/ oder die vierte Welle (23) mittels eines zweiten Antriebes (52) der Vorrichtung derart angetrieben wird, dass eine untere Bandstrecke (21b) des mindestens einen zweiten Wickelbandes (21) von der vierten Welle (23) zur dritten Welle (22) hin entgegen der Förderrichtung (F) bewegt wird; c) wobei die obere Wickeleinheit (20) in vertikaler Richtung oberhalb der unteren Wickeleinheit (2) derart angeordnet ist, dass zwischen der oberen Bandstrecke (3a) des mindestens einen ersten Wickelbandes (3) und der unteren Bandstrecke (21b) des mindestens einen zweiten Wickelbandes (21) ein Wickelraum (25) gebildet wird, dessen Ausdehnung in vertikaler Richtung entlang der Förderrichtung (F) vorzugsweise grösser wird, d) eine erste Zuführwalze (30), welche in Förderrichtung (F) horizontal vor der ersten Welle (4) derart angeordnet ist, dass ein oberer Scheitelpunkt (S) einer Mantelfläche der ersten Zuführwalze (30) vertikal oberhalb der oberen Bandstrecke (3a) des mindestens einen ersten Wickelbandes (3) liegt und die erste Welle (4) in Förderrichtung (F) horizontal in einem ersten Abstand von weniger als 5mm zur Mantelfläche der ersten Zuführwalze (30) und vertikal unterhalb des oberen Scheitelpunktes (S) angeordnet ist, wobei eine Längsachse der ersten Welle (4) parallel zu einer Längsachse der ersten Zuführwalze (30) ist, **dadurch gekennzeichnet, dass** e) die erste Welle (4) einen Durchmesser von maximal 15mm, vorzugsweise von maximal 10mm aufweist, wobei eine Mantelfläche der ersten Welle (4) über mindestens ein Wälzlager (10) auf ein in der Förderrichtung (F) hinter der ersten Welle (4) angeordnetes Stützelement (9) abgestützt wird.

2. Vorrichtung gemäss Anspruch 1, **dadurch gekennzeichnet, dass** die Mantelfläche der ersten Welle (4) über mehr als ein Wälzlager (10), insbesondere über zwei, drei, vier, fünf, sechs oder mehr Wälzlager (10) auf das Stützelement (9) abgestützt ist, welche vorzugsweise in gleichmässigen Abständen zueinander in Richtung der Längsachse der ersten Welle (4) entlang der Mantelfläche der ersten Welle (4) angeordnet sind.

3. Vorrichtung gemäss einem der Ansprüche 1 oder 2, **dadurch gekennzeichnet, dass** das mindestens eine Wälzlager (10) am Stützelement (9) befestigt ist, wobei die Mantelfläche der ersten Welle (4) auf einem Aussenkäfig des mindestens einen Wälzlagers (10) läuft.

4. Vorrichtung gemäss einem der Ansprüche 1 bis 3, **dadurch gekennzeichnet, dass** das Stützelement (9) ein längliches Profil ist, dessen Längsachse parallel zu einer Längsachse der ersten Welle (4) liegt, wobei die Vorrichtung über mindestens zwei Wälzlager (10) verfügt und die mindestens zwei Wälzlager (10) in einer Richtung, die im rechten Winkel zur Längsachse des Stützelements (9) liegt, relativ zueinander versetzt auf dem Stützelement (9) angeordnet sind.

5. Vorrichtung gemäss einem der Ansprüche 1 bis 4, **dadurch gekennzeichnet, dass** die erste Welle (4) und das Stützelement (9) miteinander über mindestens ein Verbindungselement (12) fix relativ zueinander verbunden sind und dieses mindestens eine Verbindungselement (12) entlang einer Gleitführung eines Gehäuses (35) der Vorrichtung derart verschiebbar gelagert ist, dass die erste Welle (4) im ersten Abstand parallel zur Mantelfläche der ersten Zuführwalze (30) bewegt werden kann.

6. Vorrichtung gemäss einem der Ansprüche 1 bis 5, **dadurch gekennzeichnet, dass** die untere Wickeleinheit (2) über eine fünfte Welle (6) verfügt, welche zwischen der ersten Welle (4) und der zweiten Welle (5) angeordnet ist und auf welcher die obere Bandstrecke (3a) des mindestens einen ersten Wickelbandes (3) läuft, wobei die fünfte Welle (6) derart angeordnet ist, dass die obere Bandstrecke (3a) des mindestens einen ersten Wickelbandes (3) durch die fünfte Welle (6) teilweise umgelenkt wird, so dass ein erster Teil der oberen Bandstrecke (3a) zwischen der ersten Welle (4) und der fünften Welle (6) einen stumpfen Winkel relativ zu einem zweiten Teil der oberen Bandstrecke (3a) zwischen der fünften Welle (6) und der zweiten Welle (5) aufweist.

7. Vorrichtung gemäss Anspruch 6, **dadurch gekennzeichnet, dass** die fünfte Welle (6) in Förderrichtung (F) maximal 20%, insbesondere maximal 10% des Abstandes zwischen erster Welle (4) und zweiter Welle (5) von der ersten Welle (4) beanstandet ist.

8. Vorrichtung gemäss einem der Ansprüche 1 bis 7, **dadurch gekennzeichnet, dass** die dritte Welle (22) in Förderrichtung (F) vor der ersten Welle (4) und die vierte Welle (23) in Förderrichtung (F) hinter der zweiten Welle (5) liegt.

9. Vorrichtung gemäss einem der Ansprüche 1 bis 8, **dadurch gekennzeichnet, dass** die dritte Welle (22) und/oder die vierte Welle (23) vertikal verschiebbar an einem Gehäuse (35) der Vorrichtung gelagert ist/sind.

10. Vorrichtung gemäss einem der Ansprüche 1 bis 9, **dadurch gekennzeichnet, dass** die Vorrichtung über eine zweite Zuführwalze (31) verfügt, welche vertikal oberhalb der ersten Zuführwalze (30) vorzugsweise vertikal verschiebbar angeordnet ist, so dass zwischen der ersten Zuführwalze (30) und der zweiten Zuführwalze (31) ein Walzenspalt (32) gebildet wird, der insbesondere einstellbar ist.

11. Vorrichtung gemäss einem der Ansprüche 1 bis 10, **dadurch gekennzeichnet, dass** die untere Wickeleinheit (2) und die obere Wickeleinheit (20) als aus der Vorrichtung herausnehmbare Einheiten ausgebildet sind, wobei die zweite Welle (5) sowie die vierte Welle (23) jeweils auf eine an einem ihrer Enden mit einem Gehäuse (35) der Vorrichtung insbesondere drehbar verbundenen Antriebswellen (18, 28) aufschiebbar sind und die Wickeleinheiten (2, 20) im Bereich der ersten Welle (4) bzw. der dritten Welle (22) auf jeweils mindestens eine Auflagefläche (17, 29) des Gehäuses (35) auflegbar sind.

12. Vorrichtung gemäss Anspruch 11, **dadurch gekennzeichnet, dass** die mindestens eine Auflagefläche (17, 29) vertikal verschiebbar am Gehäuse (35) befestigt ist.

13. Vorrichtung gemäss einem der Ansprüche 1 bis 12, **dadurch gekennzeichnet, dass** die untere Wickeleinheit (2) über eine Mehrzahl an ersten Wickelbändern (3) verfügt, welche insbesondere einen runden Querschnitt aufweisen, wobei die erste (4) und die zweite (5) und allenfalls auch die fünfte Welle (6) über eine der Anzahl an ersten Wickelbändern (3) entsprechende Anzahl an umlaufenden Rillen (13) verfügen, in denen die ersten Wickelbänder (3) teilweise laufen, wobei die umlaufenden Rillen (13) vorzugsweise in regelmässigen Abständen in Richtung der Längsachse der jeweiligen Welle auf deren Mantelfläche angeordnet sind.

14. Vorrichtung gemäss einem der Ansprüche 1 bis 13, **dadurch gekennzeichnet, dass** die obere Wickeleinheit (20) über eine Mehrzahl an zweiten Wickelbändern (21) verfügt, welche insbesondere einen runden Querschnitt aufweisen, wobei die dritte (22) und die vierte Welle (23) über eine der Anzahl an zweiten Wickelbändern (21) entsprechende Anzahl an umlaufenden Rillen verfügen, in denen die zweiten Wickelbänder (21) teilweise laufen, wobei die umlaufenden Rillen vorzugsweise in regelmässigen Abständen in Richtung der Längsachse der jeweiligen Welle (22, 23) auf deren Mantelfläche angeordnet sind.

15. Vorrichtung gemäss einem der Ansprüche 1 bis 14, **dadurch gekennzeichnet, dass** die untere Wickeleinheit (2) in Förderrichtung (F) hinter der zweiten Welle (5) über einen flächigen Abweiser (11) verfügt, der sich in Förderrichtung (F) in einem Winkel vom Wickelraum (25) weg erstreckt.

## Claims

1. Device for winding dough pieces into wound dough products, in particular croissants, comprising:
a) a lower winding unit (2) with at least one first winding belt (3), which is tensioned around a first shaft (4) and around a second shaft (5), wherein the first shaft (4) and/or the second shaft (5) is driven by means of a first drive (51) of the device (1) in such a way that an upper belt section (3a) of the at least one first winding belt (3) is moved from the first shaft (4) towards the second shaft (5) in a conveying direction (F);
b) an upper winding unit (20) with at least one second winding belt (21), which is tensioned around a third shaft (22) and around a fourth shaft (23), wherein the third shaft (22) and/or the fourth shaft (23) is driven by means of a second drive (52) of the device (1) in such a way that a lower belt section (21b) of the at least one second winding belt (21) is moved from the fourth shaft (23) towards the third shaft (22) counter to the conveying direction (F);
c) wherein the upper winding unit (20) is arranged in the vertical direction above the lower winding unit (2) in such a way that a winding space (25) is formed between the upper belt section (3a) of the at least one first winding belt (3) and the lower belt section (21b) of the at least one second winding belt (21), the extension of which in the vertical direction along the conveying direction (F) preferably increases,
d) a first feed roller (30), which is arranged horizontally in front of the first shaft (4) in the conveying direction (F) in such a way that an upper vertex (S) of a shell surface of the first feed roller (30) lies vertically above the upper belt section (3a) of the at least one first winding belt (3) and the first shaft (4) is arranged horizontally in the conveying direction (F) at a first distance of less than 5 mm from the shell surface of the first feed roller (30) and vertically below the upper vertex (S), wherein a longitudinal axis of the first shaft (4) is parallel to a longitudinal axis of the first feed roller (30),
**characterized in that**
e) the first shaft (4) has a diameter of at most 15 mm, preferably of at most 10 mm, wherein a shell surface of the first shaft (4) is supported via at least one rolling bearing (10) on a supporting element (9) arranged behind the first shaft (4) in the conveying direction (F).

2. Device according to claim 1, **characterized in that** the shell surface of the first shaft (4) is supported on the supporting element (9) via more than one rolling bearing (10), in particular via two, three, four, five, six or more rolling bearings (10), which are preferably arranged at uniform distances from one another in the direction of the longitudinal axis of the first shaft (4) along the shell surface of the first shaft (4).

3. Device (1) according to one of claims 1 or 2, **characterized in that** the at least one rolling bearing (10) is fastened to the supporting element (9), wherein the shell surface of the first shaft runs on an outer cage of the at least one rolling bearing (10).

4. Device according to one of claims 1 to 3, **characterized in that** the supporting element (9) is an elongate profile, the longitudinal axis of which lies parallel to a longitudinal axis of the first shaft (4), wherein the device (1) has at least two rolling bearings (10) and the at least two rolling bearings (10) are arranged on the supporting element (9) offset relative to one another in a direction which lies at right angles to the longitudinal axis of the supporting element (9).

5. Device according to one of claims 1 to 4, **characterized in that** the first shaft (4) and the supporting element (9) are connected to one another fixedly relative to one another via at least one connecting element (12) and this at least one connecting element (12) is mounted displaceably along a sliding guide of a housing (35) of the device (1) in such a way that the first shaft (4) can be moved parallel to the shell surface of the first feed roller (30) at the first distance.

6. Device according to one of claims 1 to 5, **characterized in that** the lower winding unit (2) has a fifth shaft (6), which is arranged between the first shaft (4) and the second shaft (5) and on which the upper belt section (3a) of the at least one first winding belt (3) runs, wherein the fifth shaft (6) is arranged in such a way that the upper belt section (3a) of the at least one first winding belt (3) is partially deflected by the fifth shaft (6), so that a first part of the upper belt section (3a) between the first shaft (4) and the fifth shaft (6) has an obtuse angle relative to a second part of the upper belt section (3a) between the fifth shaft (6) and the second shaft (5).

7. Device according to claim 6, **characterized in that** the fifth shaft (6) is spaced apart from the first shaft (4) in the conveying direction (F) by a maximum of 20%, in particular by a maximum of 10%, of the distance between the first shaft (4) and the second shaft (5).

8. Device according to one of claims 1 to 7, **characterized in that** the third shaft (22) lies in front of the first shaft (4) in the conveying direction (F) and the fourth shaft (23) lies behind the second shaft (5) in the conveying direction (F).

9. Device according to one of claims 1 to 8, **characterized in that** the third shaft (22) and/or the fourth shaft (23) is/are mounted vertically displaceably on a housing (35) of the device (1).

10. Device according to one of claims 1 to 9, **characterized in that** the device (1) has a second feed roller (31), which is arranged vertically displaceably, preferably vertically displaceably, above the first feed roller (30), so that a roller gap (32), which is in particular adjustable, is formed between the first feed roller (30) and the second feed roller (31).

11. Device according to one of claims 1 to 10, **characterized in that** the lower winding unit (2) and the upper winding unit (20) are designed as units which can be removed from the device (1), wherein the second shaft (5) and the fourth shaft (23) can each be pushed onto a drive shaft (18, 28), which is connected at one of its ends to a housing (35) of the device (1), in particular rotatably, and the winding units (2, 20) can be placed in the region of the first shaft (4) or the third shaft (22) on in each case at least one support surface (17, 29) of the housing (35).

12. Device according to claim 11, **characterized in that** the at least one support surface (17, 29) is fastened to the housing (35) vertically displaceably.

13. Device (1) according to one of claims 1 to 12, **characterized in that** the lower winding unit (2) has a plurality of first winding belts (3), which in particular have a round cross section, wherein the first (4) and the second (5) and possibly also the fifth shaft (6) have a number of circumferential grooves (13), which corresponds to the number of first winding belts (3) and in which the first winding belts (3) run partially, wherein the circumferential grooves (13) are preferably arranged at regular distances in the direction of the longitudinal axis of the respective shaft on the shell surface thereof.

14. Device according to one of claims 1 to 13, **characterized in that** the upper winding unit (20) has a plurality of second winding belts (21), which in particular have a round cross section, wherein the third (22) and the fourth shaft (23) have a number of circumferential grooves, which corresponds to the number of second winding belts (21) and in which the second winding belts (21) run partially, wherein the circumferential grooves are preferably arranged at regular distances in the direction of the longitudinal axis of the respective shaft (22, 23) on the shell surface thereof.

15. Device according to one of claims 1 to 14, **characterized in that** the lower winding unit (2) has, behind the second shaft (5) in the conveying direction (F), a planar deflector (11), which extends away from the winding space (25) at an angle in the conveying direction (F).

## Revendications

1. Dispositif destiné à enrouler des pâtons en produits à base de pâte enroulés, en particulier des croissants, comportant :
a) une unité d'enroulement inférieure (2) comprenant une première courroie d'enroulement (3), laquelle est tendue autour d'un premier arbre (4) et autour d'un deuxième arbre (5), le premier arbre (4) et/ou le deuxième arbre (5) étant entraînés au moyen d'un premier entraînement (51) du dispositif (1) de telle façon qu'une section de courroie supérieure (3a) de l'au moins une première courroie d'enroulement (3) est déplacée depuis le premier arbre (4) vers le deuxième arbre (5) dans une direction de transport (F) ;
b) une unité d'enroulement supérieure (20) comprenant au moins une deuxième courroie d'enroulement (21), laquelle est tendue autour d'un troisième arbre (22) et autour d'un quatrième arbre (23), le troisième arbre (22) et/ou le quatrième arbre (23) étant entraînés au moyen d'un deuxième entraînement (52) du dispositif (1) de telle façon qu'une section de courroie inférieure (21b) de l'au moins une deuxième courroie d'enroulement (21) est déplacée depuis le quatrième arbre (23) vers le troisième arbre (22) contre la direction de transport (F) ;
c) dans lequel l'unité d'enroulement supérieure (20) est agencée, dans la direction verticale, au-dessus de l'unité d'enroulement inférieure (2), de manière à former un espace d'enroulement (25) entre la section de courroie supérieure (3a) de l'au moins une première courroie d'enroulement (3) et la section de courroie inférieure (21b) de l'au moins une deuxième courroie d'enroulement (21), dont l'étendue dans la direction verticale augmente de préférence le long de la direction de transport (F),
d) un premier rouleau d'alimentation (30), lequel est agencé horizontalement devant le premier arbre (4) dans la direction de transport (F), de telle façon qu'un sommet supérieur (S) d'une surface d'enveloppe du premier rouleau d'alimentation (30) se situe verticalement au-dessus de la section de courroie supérieure (3a) de l'au moins une première courroie d'enroulement (3), et le premier arbre (4) est agencé horizontalement dans la direction de transport (F) à une première distance inférieure à 5 mm par rapport à la surface d'enveloppe du premier rouleau d'alimentation (30) et verticalement sous le sommet supérieur (S), dans lequel un axe longitudinal du premier arbre (4) est parallèle à un axe longitudinal du premier rouleau d'alimentation (30),
**caractérisé en ce que**
e) le premier arbre (4) présente un diamètre de 15 mm maximum, de préférence de 10 mm maximum, dans lequel une surface d'enveloppe du premier arbre (4) est supportée par l'intermédiaire d'au moins un roulement (10) sur un élément de support (9) agencé derrière le premier arbre (4) dans la direction de transport (F).

2. Dispositif selon la revendication 1, **caractérisé en ce que** la surface d'enveloppe du premier arbre (4) est supportée sur l'élément de support (9) par l'intermédiaire de plusieurs roulements (10), en particulier par l'intermédiaire de deux, trois, quatre, cinq, six roulements (10) ou plus, lesquels sont agencés de préférence à des distances uniformes les uns des autres dans la direction de l'axe longitudinal du premier arbre (4), le long de la surface d'enveloppe du premier arbre (4).

3. Dispositif (1) selon l'une des revendications 1 ou 2, **caractérisé en ce que** l'au moins un roulement (10) est fixé à l'élément de support (9), dans lequel la surface d'enveloppe du premier arbre roule sur une cage extérieure de l'au moins un roulement (10).

4. Dispositif selon l'une des revendications 1 à 3, **caractérisé en ce que** l'élément de support (9) est profilé allongé, dont l'axe longitudinal s'étend parallèlement à un axe longitudinal du premier arbre (4), dans lequel le dispositif (1) comporte au moins deux roulements (10) et les au moins deux roulements (10) sont agencés sur l'élément de support (9) de façon décalée les uns par rapport aux autres dans une direction perpendiculaire à l'axe longitudinal de l'élément de support (9).

5. Dispositif selon l'une des revendications 1 à 4, **caractérisé en ce que** le premier arbre (4) et l'élément de support (9) sont reliés l'un à l'autre, fixement l'un par rapport à l'autre, par l'intermédiaire d'au moins un élément de liaison (12), et ledit au moins un élément de liaison (12) est monté de façon déplaçable le long d'un guidage coulissant d'un boîtier (35) du dispositif (1), de telle façon que le premier arbre (4) peut être déplacé parallèlement à la surface d'enveloppe du premier rouleau d'alimentation (30) à la première distance.

6. Dispositif selon l'une des revendications 1 à 5, **caractérisé en ce que** l'unité d'enroulement inférieure (2) comporte un cinquième arbre (6), lequel est agencé entre le premier arbre (4) et le deuxième arbre (5) et sur lequel roule la section de courroie supérieure (3a) de l'au moins une première courroie d'enroulement (3), dans lequel le cinquième arbre (6) est agencé de telle façon que la section de courroie supérieure (3a) de l'au moins une première courroie d'enroulement (3) est partiellement déviée par le cinquième arbre (6), de telle façon qu'une première partie de la section de courroie supérieure (3a) entre le premier arbre (4) et le cinquième arbre (6) forme un angle obtus par rapport à une deuxième partie de la section de courroie supérieure (3a) entre le cinquième arbre (6) et le deuxième arbre (5).

7. Dispositif selon la revendication 6, **caractérisé en ce que** le cinquième arbre (6) est espacé du premier arbre (4) dans la direction de transport (F), d'un maximum de 20 %, en particulier d'un maximum de 10 %, de la distance entre le premier arbre (4) et le deuxième arbre (5).

8. Dispositif selon l'une des revendications 1 à 7, **caractérisé en ce que** le troisième arbre (22) se situe devant le premier arbre (4) dans la direction de transport (F), et le quatrième arbre (23) se situe derrière le deuxième arbre (5) dans la direction de transport (F).

9. Dispositif selon l'une des revendications 1 à 8, **caractérisé en ce que** le troisième arbre (22) et/ou le quatrième arbre (23) est/sont monté(s) de façon verticalement déplaçable sur un boîtier (35) du dispositif (1).

10. Dispositif selon l'une des revendications 1 à 9, **caractérisé en ce que** le dispositif (1) comporte un deuxième rouleau d'alimentation (31), lequel est agencé verticalement au-dessus du premier rouleau d'alimentation (30), de préférence de façon verticalement déplaçable, de telle façon qu'un espacement entre rouleaux (32), lequel est en particulier réglable, est formé entre le premier rouleau d'alimentation (30) et le deuxième rouleau d'alimentation (31).

11. Dispositif selon l'une des revendications 1 à 10, **caractérisé en ce que** l'unité d'enroulement inférieure (2) et l'unité d'enroulement supérieure (20) sont conçues comme des unités pouvant être retirées du dispositif (1), dans lequel le deuxième arbre (5) et le quatrième arbre (23) peuvent être emmanchés sur un arbre d'entraînement (18, 28), lequel est relié à un boîtier (35) du dispositif (1) à l'une de ses extrémités, en particulier de façon rotative, et les unités d'enroulement (2, 20) peuvent être placées dans la région du premier arbre (4) ou du troisième arbre (22), respectivement sur au moins une surface de support (17, 29) du boîtier (35).

12. Dispositif selon la revendication 11, **caractérisé en ce que** l'au moins une surface de support (17, 29) est fixée au boîtier (35) de façon verticalement déplaçable.

13. Dispositif (1) selon l'une des revendications 1 à 12, **caractérisé en ce que** l'unité d'enroulement inférieure (2) comporte une pluralité de premières courroies d'enroulement (3) présentant en particulier une section transversale circulaire, dans lequel le premier (4) et le deuxième (5) et éventuellement également le cinquième arbre (6) présentent un nombre de rainures circonférentielles (13) correspondant au nombre de premières courroies d'enroulement (3), dans lesquelles les premières courroies d'enroulement (3) s'étendent partiellement, dans lequel les rainures circonférentielles (13) sont de préférence agencées à des intervalles réguliers dans la direction de l'axe longitudinal de l'arbre respectif, sur la surface d'enveloppe de celui-ci.

14. Dispositif selon l'une des revendications 1 à 13, **caractérisé en ce que** l'unité d'enroulement supérieure (20) comporte une pluralité de deuxièmes courroies d'enroulement (21) présentant en particulier une section transversale circulaire, dans lequel le troisième (22) et le quatrième arbre (23) présentent un nombre de rainures circonférentielles correspondant au nombre de deuxièmes courroies d'enroulement (21), dans lesquelles les deuxièmes courroies d'enroulement (21) s'étendent partiellement, dans lequel les rainures circonférentielles sont de préférence agencées à des intervalles réguliers dans la direction de l'axe longitudinal de l'arbre respectif (22, 23), sur la surface d'enveloppe de celui-ci.

15. Dispositif selon l'une des revendications 1 à 14, **caractérisé en ce que** l'unité d'enroulement inférieure (2) comporte, derrière le deuxième arbre (5) dans la direction de transport (F), un déflecteur plan (11) s'étendant à distance de l'espace d'enroulement (25), selon un angle dans la direction de transport (F).
